# EUROPEAN PATENT APPLICATION

(11) **EP 4 299 515 A1**
(43) Date of publication of application: **03.01.2024**
(21) Application number: 23178620.3
(22) Date of filing: 12.06.2023
(51) Int. Cl.: C01B 32/23, A45C 5/02, C01B 33/22, C08K 3/013, C08K 3/34, C08K 9/00, C01F 5/24, C01F 5/14, C01F 11/02

(54) **A MECHANOCHEMICALLY CARBONATED MAGNESIUM SILICATE, METHODS OF ITS PRODUCTION AND USES THEREOF**

(30) Priority: 13.06.2022 EP 22178655
(71) Applicant: Carbon Upcycling Technologies Inc., Calgary, AB T3S 0A2 (CA)
(72) Inventor: ZHOU, Zhanyi, Calgary, T3S0A2 (CA); SAVILOW, Madison Anne Walshe, Calgary, T3S0A2 (CA); SCOTT, Georgia, Islington, N4 2BT (GB)
(74) Representative: Nederlandsch Octrooibureau

(57) **Abstract**

The present invention relates to a mechanochemically carbonated magnesium silicate which has a BET surface area within the range of 20 to 100 m²/g, preferably 30 to 80 m²/g, more preferably 40 to 70 m²/g, most preferably 45 to 65 m²/g and/or an amorphous content as determined by XRD of at least 30 wt.%, preferably at least 40 wt.%, more preferably at least 50 wt.%, even more preferably at least 60 wt.% a CO₂ content of at least 3 wt.%. The invention further relates to methods of its production and uses thereof, for example as a filler in polymers. The compositions comprising the mechanochemically carbonated magnesium silicate and a polymer (such as a polyolefin) provide the benefits of being a CO₂ negative material having excellent functional properties which can be used for a variety of purposes, for example as a component of clothing or apparel, or as a component of backpacks such as a buckle.

## Description

### Field of the invention

The present invention relates to a mechanochemically carbonated magnesium silicate. The invention further relates to methods of its production and uses thereof, for example, as a filler in polymers. The invention further relates to compositions comprising the mechanochemically carbonated magnesium silicate and a polymer and methods of their production.

### Background art

Synthetic polymers are well known and important materials which are used for various purposes in a wide variety of industries. For example, polymers are used as packaging material, in building and construction, as textiles, etc. A polymer is usually used in the form of a composition comprising the actual polymeric material (e.g. polyethylene) together with additives such as fillers, plasticizers, UV stabilizers, antioxidants, fibers, etc. Fillers can be particulate material such as minerals which are added to polymers to reduce cost and/or modify mechanical properties.

An example of a widely employed polymer filler is magnesium silicate. A comprehensive overview of fillers in polymeric materials can be found in Rothon, Roger, ed. Fillers for polymer applications. Vol. 489. Berlin, Germany: Springer, 2017.

Polymers are heavily criticised for their environmental impact. While research towards bio-based and recycled polymers is advancing quickly, much of the virgin polymer production is still based on raw material streams from the oil & gas industry, which is associated with large and significant CO₂ emissions.

The present inventors have identified that it would be desirable to develop a cost-effective filler additive which can contribute to a CO₂ emission reduction and does not detrimentally affect the properties of the polymers.

WO2019012474A1 discloses certain mechanochemically exfoliated nanoparticles.

It is an object of the present invention to provide improved fillers for polymers.

It is a further object of the present invention to provide improved fillers for polymers which are cheap to produce.

It is a further object of the present invention to provide improved fillers for polymers which are produced using carbon capture and sequestration technology.

It is a further object of the present invention to provide improved fillers for polymers which improve the properties of the resulting polymer composition, such as the tensile modulus.

### Summary of the invention

In a first aspect the present invention provides a mechanochemically carbonated magnesium silicate which has
- a BET surface area within the range of 20 to 100 m²/g and/or an amorphous content as determined by XRD of at least 30 wt.%; and
- a CO₂ content of at least 3 wt.%, preferably at least 6 wt.%, wherein the CO₂ content is determined as the mass loss above 200°C measured by thermogravimetric analysis (TGA) employing a temperature trajectory wherein the temperature was increased from room temperature to 800°C at a rate of 10 °C/min and then decreased to room temperature at a rate of 10 °C/min.

As will be shown in the appended examples, it was found that when such a mechanochemically carbonated magnesium silicate is used as a filler in various polymers, in particular polyolefins, excellent mechanical properties can be obtained while enabling the storage of significant amounts of CO₂ in the polymer composition material. The mechanochemically carbonated magnesium silicate of the invention advantageously provides a filler which is CO₂ negative and has a neutral colour, such that polymer compositions comprising a CO₂ negative filler of various colours can be provided.

The present inventors have found that the mechanochemical carbonation of the present invention effects an increase in the overall amorphous content of the magnesium silicate precursor. Without wishing to be bound by any theory, it is believed that the mechanochemical process of the invention may result in an increase in amorphous content when analyzed by XRD wherein at least some crystalline domains which may be present in a feedstock are maintained via an internal architecture in the form of microcrystallinity, which persists in a more generalized disordered structure. This disordered macro structure, thus, promotes higher reactivity.

The production of said mechanochemically carbonated magnesium silicate filler relies on a cheap CO₂ capture technology platform, such that a filler is provided which can be produced in an economically viable manner and which combines both the CO₂ emission reduction achieved by reduced polymer consumption and the CO₂ emission reduction achieved by carbon capture technology.

In a further aspect, the invention provides a method for producing the mechanochemically carbonated magnesium silicate of the present invention, comprising the following steps:
a) providing a solid feedstock comprising magnesium silicate;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain the mechanochemically carbonated magnesium silicate.

In another aspect, the invention provides the mechanochemically carbonated magnesium silicate obtainable by the method for producing mechanochemically carbonated magnesium silicate described herein.

In another aspect the invention provides a method for co-producing a mixture of mechanochemically carbonated magnesium silicate and mechanochemically oxidized graphite, comprising the following steps:
a) providing a solid feedstock comprising magnesium silicate and graphite;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain a mixture of mechanochemically carbonated magnesium silicate and mechanochemically oxidized graphite.

In another aspect, the invention provides a mixture of mechanochemically carbonated magnesium silicate and mechanochemically oxidized graphite obtainable by the method for co-producing a mixture of mechanochemically carbonated magnesium silicate and mechanochemically oxidized graphite described herein.

In another aspect, the invention provides a composition comprising mechanochemically carbonated magnesium silicate as described herein and a polymer. Preferably, said composition further comprises mechanochemically oxidized graphite.

In another aspect, the invention provides a method for preparing a composition as described herein, said method comprising the following steps:
(i) providing mechanochemically carbonated magnesium silicate as described herein;
(ii) providing a polymer as described herein;
(iii) optionally providing mechanochemically oxidized graphite as described herein; and
(iv) combining the mechanochemically carbonated magnesium silicate of step (i) with the polymer of step (ii) and optionally the mechanochemically oxidized graphite of step (iii).

In another aspect the invention provides the use of mechanochemically carbonated magnesium silicate as described herein:
- as a filler in polymers;
- to increase the crystallization temperature of a polymer;
- to increase the tensile modulus of a polymer;
- to increase the yield stress of a polymer; and/or
- to increase the impact strength of a polymer.

In another aspect the invention provides a method:
- to increase the crystallization temperature of a polymer
- to increase the tensile modulus of a polymer;
- to increase the yield stress of a polymer; and/or
- to increase the impact strength of a polymer,
the method comprising the addition of mechanochemically carbonated magnesium silicate as described herein to the polymer.

A further aspect of the invention provides a luggage item or luggage accessory comprising a hardware component, wherein the hardware component comprises a hardware composition comprising mechanochemically carbonated magnesium silicate as described herein and/or mechanochemically oxidized graphite as described herein and optionally a polymer.

### Description of embodiments

In accordance with the invention, the BET surface area as referred to herein is determined at a temperature of 77K using a sample mass of 0.5-1g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini 2375 preferably equipped with a Micromeritics FlowPrep 060 flowing-gas degassing unit.

The amorphous content as determined by X-Ray Diffraction (XRD) referenced herein is preferably determined using a corundum standard. A suitable, and thus preferred, XRD analysis setup is by using a PANalytical Aeris X-ray diffractometer where Rietveld refinement is performed (for example using HighScore Plus XRD analysis software).

TGA as used herein refers to Thermogravimetric Analysis, a technique known to the person skilled in the art. A preferred TGA setup to determine the CO₂ content of the feedstocks and mechanochemically carboxylated materials in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, the particle size distribution characteristics such as D10, D50, D90 and D(4:3) are determined by measuring with a laser light scattering particle size analyzer utilizing the Fraunhofer theory of light scattering, such as the Fritsch Analysette 22 Nanotec or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles. As is known to the skilled person, the D(4:3) is the volume mean diameter.

"Magnesium silicate" as used herein highly preferably refers to hydrated magnesium silicate with the chemical formula Mg₃Si₄O₁₀(OH)₂, also known as "talc".

"Mechanochemically carbonated magnesium silicate" as used herein refers to magnesium silicate which has been subjected to a CO₂ sequestration or carbonation process, in particular the process described herein, resulting in partial conversion of magnesium silicate into carbonate bearing minerals. The expression "mechanochemically carbonated magnesium silicate" includes surface modified mechanochemically carbonated magnesium silicates, in particular surface modified by treatment with agents such as organosilanes, polyols (e.g. glycols), stearates or any other compatibilizer, for example a compatibilizer as described herein elsewhere. The surface modification may have taken place before or after the mechanochemical carbonation.

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

As used herein, the expression "particulate solid" is not particularly limited to the nature of the particulate solid and concerns any solid material composed of distinct particles or pieces, such as dust, fibres, fines, chips, chunks, flakes, granules, pellets, prills, pastilles, powder, etc. Preferably the particulate solid is a powder.

As used herein, the expression "gas comprising CO₂" is not particularly limiting and is intended to denote any gas comprising CO₂. In particular, the gas may comprise other reactive components such as O₂, NH₃, H₂S, SO₂, NOₓ and the like, as is often the case for industrial waste gas streams. For the purposes of the present invention, ideal gas law is assumed such that any vol% referred to herein in the context of a gas is identical to mol%.

As used herein the expression "tensile modulus" refers to the Young's modulus as determined in accordance with ASTM 638 (2014).

As used herein the expression "yield stress" refers to the pressure exhibited at yielding as determined in accordance with ASTM 638 (2014).

As used herein the expression "impact strength" refers to the impact strength as determined in accordance with the Charpy impact test of ASTM D6110 (2018).

### Mechanochemically carbonated magnesium silicate

In a first aspect the present invention provides a mechanochemically carbonated magnesium silicate which has
- a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
- a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min.

Untreated magnesium silicate which has not been mechanochemically carbonated according to the process described herein elsewhere only shows a minor mass loss above 200°C measured by TGA employing a temperature trajectory wherein the temperature was increased from room temperature to 800°C at a rate of 10 °C/min and then decreased to room temperature at a rate of 10 °C/min. Said mass loss is less than 2 wt.% for untreated magnesium silicate (i.e. virgin magnesium silicate a.k.a. regular magnesium silicate). Hence, the CO₂ content of the mechanochemically carbonated magnesium silicate of the invention, when determined as described herein, provides a good approximation of the amount of CO₂ which has been sequestered by the mechanochemical carbonation of the magnesium silicate, the CO₂ content being sufficiently high for the mass loss which may be present when measuring virgin magnesium silicate to play a negligible role.

In preferred embodiments of the invention, the mechanochemically carbonated magnesium silicate of the invention is provided wherein A is more than 1 wt.%, preferably more than 2 wt.%, more preferably more than 3.5 wt.%,
wherein A = CO₂(treated) - CO₂(raw),
wherein CO₂(treated) is determined on the mechanochemically carbonated magnesium silicate of the invention as the mass loss above 200°C measured by TGA employing a temperature trajectory wherein the temperature was increased from room temperature to 800°C at a rate of 10 °C/min and then decreased to room temperature at a rate of 10 °C/min,
wherein CO₂(raw) is determined on the magnesium silicate before mechanochemical carbonation as the mass loss above 200°C measured by TGA employing a temperature trajectory wherein the temperature was increased from room temperature to 800°C at a rate of 10 °C/min and then decreased to room temperature at a rate of 10 °C/min.

In embodiments of the invention, the particle size distribution of the mechanochemically carbonated magnesium silicate has one, two, or all, preferably all, of the following characteristics:
- a D10 within the range of 0.01-5 µm, preferably 0.1-3 µm, most preferably 0.5-1.5 µm;
- a D50 within the range of 0.1-50 µm, preferably 1-25 µm, most preferably 2-10 µm;
- a D90 within the range of 5-150 µm, preferably 10-100 µm, most preferably 15-40 µm.

In highly preferred embodiments of the invention, the mechanochemically carbonated magnesium silicate has a BET surface area of 20 to 100 m²/g, preferably 30 to 80 m²/g, more preferably 40 to 70 m²/g, most preferably 45 to 65 m²/g and an amorphous content as determined by XRD of at least 30 wt.%, preferably at least 40 wt.%, more preferably at least 50 wt.% and most preferably at least 60 wt.%. For example, in some embodiments the mechanochemically carbonated magnesium silicate has a BET surface area of 20 to 100 m²/g, preferably 30 to 80 m²/g, more preferably 40 to 70 m²/g, most preferably 45 to 65 m²/g and an amorphous content as determined by XRD of at least 50 wt.%, more preferably at least 60 wt.%. For example, in some embodiments the mechanochemically carbonated magnesium silicate has a BET surface area of 40 to 70 m²/g, preferably 45 to 65 m²/g and an amorphous content as determined by XRD of at least 50 wt.%, more preferably at least 60 wt.%.

In preferred embodiments of the invention, the mechanochemically carbonated magnesium silicate has a CO₂ content within the range of 3-40 wt.%, preferably 5-35 wt.%, more preferably 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min. The CO₂ content is typically less than 25 wt.%. In particular embodiments the CO₂ content as described herein is within the range of 7-22 wt.%.

Accordingly, in preferred embodiments of the invention, the mechanochemically carbonated magnesium silicate has
- a BET surface area within the range of 20 to 100 m²/g, preferably 30 to 80 m²/g, more preferably 40 to 70 m²/g, most preferably 45 to 65 m²/g; and
- a CO₂ content within the range of 3-40 wt.%, preferably 5-35 wt.%, more preferably 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.1-50 µm, preferably 1-25 µm, most preferably 2-10 µm, and
- an amorphous content as determined by XRD of at least 30 wt.%, preferably at least 40 wt.%, more preferably at least 50 wt.%, even more preferably at least 60 wt.%.
The other particle size distribution characteristics D10, D90 and D(4:3) are preferably as described herein earlier

In more preferred embodiments of the invention, the mechanochemically carbonated magnesium silicate has
- a BET surface area within the range of 40 to 70 m²/g, most preferably 45 to 65 m²/g; and
- a CO₂ content within the range of 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- an amorphous content as determined by XRD of at least 50 wt.%, even more preferably at least 60 wt.

In some embodiments the mechanochemically carbonated magnesium silicate is not surface-modified.

The mechanochemically carbonated magnesium silicate described herein has various uses and applications providing the benefits of storing significant amounts of CO₂. In particularly preferred embodiments, the mechanochemically carbonated magnesium silicate described herein is suitable for use in the manufacture of a hardware composition employed in a hardware component of a luggage item or luggage accessory, wherein the hardware component is as herein defined and the luggage item or luggage accessory is as herein defined. Also disclosed herein is a luggage item or luggage accessory comprising a hardware component, wherein the hardware component comprises a hardware composition comprising mechanochemically carbonated magnesium silicate, wherein the mechanochemically carbonated magnesium silicate is as described herein. The hardware composition may, for example, comprise at least 1 wt.% (by total weight of the composition) of the mechanochemically carbonated magnesium silicate, preferably at least 5 wt.% of the mechanochemically carbonated magnesium silicate.

### Methods for the production of mechanochemically carbonated magnesium silicate

In a further aspect, the invention provides a method for producing the mechanochemically carbonated magnesium silicate as described herein, comprising the following steps:
a) providing a solid feedstock comprising magnesium silicate;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain the mechanochemically carbonated magnesium silicate.

It is within the capacity of one skilled in the art, in light of the guidance provided in the present disclosure, to adapt the relevant process parameters such that a mechanochemically carbonated magnesium silicate is obtained which has the properties recited herein.

The solid feedstock provided in step (a) is typically a particulate material.

In embodiments of the invention, the solid feedstock has a moisture content of less than 3 wt.%, preferably less than 2 wt.%, more preferably less than 1 wt.% and/or a D50 within the range of 0.1-500 µm, preferably within the range of 0.2-50 µm, more preferably within the range of 0.5-15 µm.

In embodiments, the method for producing the mechanochemically carbonated magnesium silicate of the invention comprises spraying the solid magnesium silicate feedstock with an aqueous composition such as water, and/or humidifying the gas comprising CO₂ which contacts the solid feedstock. Humidification of a gas stream is within the routine capabilities of the skilled person and may be performed by any means, such as bubbling or sparging the gas through an aqueous composition (e.g. water), membrane-driven water-to-gas humidification, mixing the gas stream with water vapor, etc.

It is highly preferred that the solid feedstock comprises at least 80% hydrous magnesium silicate as determined by X-ray diffraction, preferably at least 90%, more preferably at least 95%. The solid feedstock will typically be magnesium silicate obtained from natural deposits, such that it contains other minerals next to hydrous magnesium silicate such as typically magnesite, dolomite and/or chlorite. Hence, the solid feedstock optionally comprises at least 0.1% of a mineral different from hydrous magnesium silicate, as determined by X-ray diffraction. Typically the solid feedstock will comprise less than 20% of a mineral different from hydrous magnesium silicate, as determined by X-ray diffraction, preferably less than 10%, more preferably less than 5%. Such minerals different from hydrous magnesium silicate which occur in conjunction with magnesium silicate obtained from natural deposits are for example magnesite, dolomite and/or chlorite. Hence, in some embodiments of the invention the solid feedstock optionally comprises at least 0.1% of a mineral selected from magnesite, dolomite and/or chlorite as determined by X-ray diffraction, preferably the solid feedstock comprises 0.1-20% of a mineral selected from magnesite, dolomite and/or chlorite as determined by X-ray diffraction, preferably 0.1-10%, more preferably 0.1-5%.

The gas provided in step (b) may be any gas stream comprising CO₂, such as regular air, a waste gas stream having a low CO₂ concentration, or concentrated CO₂ streams. In embodiments the gas stream comprising CO₂ is regular air. In highly preferred embodiments the gas stream comprising CO₂ is a combustion flue gas, in particular a flue gas from fossil fuel combustion, wood pellet combustion, biomass combustion or municipal waste combustion. Fossil fuel combustion may be coal, petroleum, petroleum coke, natural gas, shale oil, bitumens, tar sand oil, or heavy oils combustion, or any combination thereof. The combustion flue gas may optionally have been treated to reduce the water content, the SO₂ content, and/or the NOₓ content.

Typical CO₂ concentrations for such combustion flue gas are in the range of 1-15 vol%, such as 1-10 vol% or 2-10 vol%, such that it is preferred that the gas provided in step (b) has a CO2 concentration in the range of 1-15 vol%, such as 2-10 vol%.

In embodiments of the invention, the gas provided in step (b) comprises less than 80 vol% CO₂, preferably less than 50 vol% CO₂. In such embodiments, the CO₂ concentration in the gas may be very low, such as less than 1 vol%, or less than 0.1 vol%. The CO₂ concentration in the gas provided in step (b) is preferably at least 0.1 vol%, more preferably at least 0.5 vol%. Typically, and preferably, the low concentrated gas stream is a combustion flue gas, having a CO₂ concentration in the range of 1-15 vol%, such as 1-10 vol% or 2-10 vol%, or 2-5 vol%. In alternative embodiments of the invention, the gas provided in step (b) comprises at least 80 vol% CO₂, preferably at least 95 vol% CO₂.

In some embodiments of the invention, the gas provided in step (b) comprises less than 1000 ppm (v/v) H₂O, preferably less than 100 ppm (v/v) H₂O. In more preferred embodiments of the invention, the gas provided in step (b) comprises more than 1000 ppm (v/v) H₂O, preferably more than 10000 ppm (v/v) H₂O.

In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In more preferred embodiments of the invention, the gas provided in step (b) comprises at least 80 vol% CO₂, preferably at least 95 vol% CO₂ and more than 1000 ppm (v/v) H₂O, preferably more than 10000 ppm (v/v) H₂O.

In some embodiments of the invention, the gas provided in step (b) comprises 1-15 vol% CO₂ and less than 1000 ppm (v/v) H₂O, preferably less than 100 ppm (v/v) H₂O. In more preferred embodiments of the invention, the gas provided in step (b) comprises 1-15 vol% CO₂, and more than 1000 ppm (v/v) H₂O, preferably more than 10000 ppm (v/v) H₂O.

In any embodiment of the invention, the gas provided in step (b) is typically not in a supercritical state as this is not necessary for the mild mechanochemical carbonation process of the present invention. Hence in any embodiment of the invention it is highly preferred that the gas is not in a supercritical state throughout any of the steps of the process.

In embodiments of the invention, step (d) is performed at a pressure of at least 3 atm, preferably at least 6 atm. In embodiments of the invention, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

In embodiments of the invention, step (d) is performed for at least 1 hour, preferably for at least 4 hours, more preferably for at least 8 hours.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, particle size analysis, amorphous content and/or CO₂ content determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (low-speed stirring or high-speed stirring), shearing (high-torque shearing), shaking, blending, a fluidized bed or ultrasonication, preferably grinding, milling, mixing, stirring (low-speed stirring or high-speed stirring), shearing (high-torque shearing), or ultrasonication. The present inventors have found that the mechanochemical carbonation process is facilitated if the mechanochemical agitation operation of step (d) is performed in the presence of inert grinding or milling media (referred to herein as inert media), preferably inert balls or beads. A preferred inert media is stainless steel. In such highly preferred embodiments, the mechanical agitation operation may be simply rotating the mechanical agitation unit containing the solid feedstock, the inert grinding or milling media, and the gas. This can conveniently be performed in a rotating drum.

In preferred embodiments of the invention, step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides, nickel oxides and combinations thereof.

Hence, as will be understood from the above, in highly preferred embodiments of the invention, step (d) comprises a mechanical agitation operation, preferably grinding, milling, mixing, stirring (low-speed stirring or high-speed stirring), shearing (high-torque shearing), shaking, blending, a fluidized bed or ultrasonication, in the presence of inert grinding or milling media and a transition metal oxide catalyst. The present inventors have found that it is advantageous with a view to the efficiency of the mechanochemical carbonation (e.g. reaction time, CO₂ absorption and particle size reduction) to employ inert media as described herein before, wherein the inert media is coated with said transition metal oxide catalyst. As explained herein elsewhere, the mechanical agitation operation may be simply rotating the mechanical agitation unit containing the solid feedstock, the inert grinding or milling media, the transition metal oxide catalyst and the gas. This can conveniently be performed in a rotating drum.

As will be clear from the process description provided herein, step d) of the various processes according to the invention is a gas-solid reaction. A minor amount of solvent, such as water, can be added for wetting purposes as described herein earlier. In embodiments, no solvent, such as water is added.

In another aspect the invention provides the mechanochemically carbonated magnesium silicate obtainable by the method for producing mechanochemically carbonated magnesium silicate described herein. The mechanochemically carbonated magnesium silicate is preferably obtainable by the method for producing mechanochemically carbonated magnesium silicate described herein wherein the process is performed such that the mechanochemically carbonated magnesium silicate has
- a BET surface area within the range of 20 to 100 m²/g, preferably 30 to 80 m²/g, more preferably 40 to 70 m²/g, most preferably 45 to 65 m²/g; and
- a CO₂ content within the range of 3-40 wt.%, preferably 5-35 wt.%, more preferably 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.1-50 µm, preferably 1-25 µm, most preferably 2-10 µm, and
- an amorphous content as determined by XRD of at least 30 wt.%, preferably at least 40 wt.%, more preferably at least 50 wt.%, even more preferably at least 60 wt.%.

Without wishing to be bound by any theory, the present inventors believe that the amorphous content increase effected by the dry mechanochemical carbonation method of the invention is associated with the beneficial properties observed (such as the yield stress and impact strength). Hence, in embodiments of the invention, the mechanochemically carbonated magnesium silicate is provided which is obtainable by concomitant carbonation and amorphous content increase of a magnesium silicate precursor wherein the absolute difference between the amorphous content (expressed as % based on total weight) of the mechanochemically carbonated magnesium silicate and the amorphous content (expressed as % based on total weight) of the magnesium silicate precursor is at least 20 percentage points, preferably at least 25 percentage points, more preferably at least 30 percentage points, more preferably at least 35 percentage points. The amorphous content is determined by XRD.

In another aspect the invention provides the mechanochemically carbonated magnesium silicate obtainable by the method for producing mechanochemically carbonated magnesium silicate described herein. The mechanochemically carbonated magnesium silicate is preferably obtainable by the method for producing mechanochemically carbonated magnesium silicate described herein wherein the process is performed such that the mechanochemically carbonated magnesium silicate has
- a BET surface area within the range of 20 to 100 m²/g, preferably 30 to 80 m²/g, more preferably 40 to 70 m²/g, most preferably 45 to 65 m²/g and,
- a CO₂ content within the range of 3-40 wt.%, preferably 5-35 wt.%, more preferably 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and,
- an amorphous content as determined by XRD of at least 30 wt.%, preferably at least 40 wt.%, more preferably at least 50 wt.%, even more preferably at least 60 wt.%.

### Compositions comprising mechanochemically carbonated magnesium silicate and polymer

The mechanochemically carbonated magnesium silicate described herein in the context of various aspects of the invention, has various distinctive properties due to the evolution in chemical identity represented by the high degree of carbonation. It was surprisingly found that this material can be e.g. used as a filler in polymers, without detrimentally impacting material performance. Indeed, it was found that the mechanochemically carbonated magnesium silicate of the present invention constitutes an excellent filler for various polymers, in particular polyolefins, combining distinct mechanical properties with a cost-efficient CO₂ capture technology.

Hence, in another aspect the invention provides a composition comprising a mechanochemically carbonated magnesium silicate as described herein and a polymer. The polymer is a synthetic polymer. The term "polymer" as used herein includes copolymers, such as block copolymers.

In embodiments, the polymer is selected from thermoplastic polymers and thermosetting polymers. In preferred embodiments, the polymer is selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof. Notable copolymers are homophasic or heterophasic PE-PP copolymers. The polymer is preferably selected from polyacetal, polyethylene terephthalate, polypropylene, polyethylene and polybutylene adipate terephthalate, copolymers and combinations thereof. Highly preferred are polyolefins, such as polypropylene, polyethylene, copolymers thereof and combinations thereof, in particular polypropylene. Polyethylene includes HDPE, LDPE, LLDPE, etc.

Polymers are heavily criticised for their environmental impact. Much of the virgin polymer production is based on raw material streams from the oil and gas industry. One way to reduce the negative environmental impact of using polymers is to avoid the use of virgin polymer and/or to use polymer waste material. In embodiments of the invention, therefore, the polymer is not virgin polymer. Thus, for example, the polymer may be recycled polymer, wherein the polymer is as herein defined. The polymer may be recycled using any known recycling technique. Preferred recycled polymer includes recycled polyacetal, recycled polyethylene terephthalate, recycled polypropylene, recycled polyethylene and recycled polybutylene adipate terephthalate, copolymers and combinations thereof. Highly preferred recycled polymers are recycled polyolefins, such as recycled polypropylene, recycled polyethylene, copolymers thereof and combinations thereof, in particular polypropylene. Recycled polyethylene includes recycled HDPE, recycled LDPE, recycled LLDPE, etc.

In embodiments of the invention, the composition comprises at least 0.1 wt.% (by total weight of the composition) of the mechanochemically carbonated magnesium silicate, preferably at least 1 wt.% of the mechanochemically carbonated magnesium silicate, more preferably at least 5 wt.% of the mechanochemically carbonated magnesium silicate and/or at least 50 wt.% (by total weight of the composition) of the polymer, preferably at least 55 wt. % of the polymer, more preferably at least 60 wt.% of the polymer, for example, at least 65 wt.% of the polymer or at least 70 wt.% of the polymer. Typically, the composition will comprise at least 5 wt.% of the mechanochemically carbonated magnesium silicate and at least 50 wt.% (by total weight of the composition) of the polymer, preferably at least 55 wt.% of the polymer, more preferably at least 60 wt.% of the polymer.

In embodiments of the invention, the composition comprises less than 40 wt.% (by total weight of the composition) of the mechanochemically carbonated magnesium silicate, preferably less than 30 wt.% of the mechanochemically carbonated magnesium silicate, more preferably less than 20 wt.% of the mechanochemically carbonated magnesium silicate.

In preferred embodiments of the invention, the composition comprises 0.1-40 wt.% (by total weight of the composition) of the mechanochemically carbonated magnesium silicate, preferably 1-30 wt.% of the mechanochemically carbonated magnesium silicate, more preferably 5-30 wt.% of the mechanochemically carbonated magnesium silicate, and at least 50 wt.% (by total weight of the composition) of the polymer, preferably at least 55 wt.% of the polymer, more preferably at least 60 wt.% of the polymer. In particularly preferred embodiments, the composition comprises at least 10 wt.% (by total weight of the composition) of the mechanochemically carbonated magnesium silicate, preferably at least 12 wt.%, more preferably at least 15 wt.%. For example, the composition comprises 10-40 wt.% (by total weight of the composition) of the mechanochemically carbonated magnesium silicate, preferably 12-30 wt.% of the mechanochemically carbonated magnesium silicate, more preferably 15-30 wt.% of the mechanochemically carbonated magnesium silicate, and at least 50 wt.% (by total weight of the composition) of the polymer, preferably at least 55 wt.% of the polymer, more preferably at least 60 wt.% of the polymer.

In particular embodiments of the invention, the composition comprises at least 3 wt.% (by total weight of the composition) of the mechanochemically carbonated magnesium silicate, preferably at least 4 wt.% of the mechanochemically carbonated magnesium silicate. In such embodiments the polymer is preferably a polyolefin, such as polypropylene or polyethylene. As described herein elsewhere, the composition preferably comprises at least 50 wt.% (by total weight of the composition) of the polymer, preferably at least 55 wt.% of the polymer, more preferably at least 60 wt.% of the polymer. In these embodiments the amount of polymer may be at least 80 wt.% (by total weight of the composition). As is shown in the appended examples, it has surprisingly been found that a significant crystallization temperature increase manifests when the mechanochemically carbonated magnesium silicate is employed at these levels.

In particular embodiments of the invention, the composition comprises at least 13 wt.% (by total weight of the composition) of the mechanochemically carbonated magnesium silicate, preferably at least 14 wt.% of the mechanochemically carbonated magnesium silicate. In such embodiments the polymer is preferably a polyolefin, such as polypropylene or polyethylene. As described herein elsewhere, the composition preferably comprises at least 50 wt.% (by total weight of the composition) of the polymer, preferably at least 55 wt.% of the polymer, more preferably at least 60 wt.% of the polymer. In these embodiments the amount of polymer may be at least 80 wt.% (by total weight of the composition). As is shown in the appended examples, it has surprisingly been found that a significant increase in tensile modulus manifests when the mechanochemically carbonated magnesium silicate is employed at these levels.

In particular embodiments of the invention, the composition comprises 3-13 wt.% (by total weight of the composition) of the mechanochemically carbonated magnesium silicate, preferably 4-12 wt.% of the mechanochemically carbonated magnesium silicate. In such embodiments the polymer is preferably a polyolefin, such as polypropylene or polyethylene. As described herein elsewhere, the composition preferably comprises at least 50 wt.% (by total weight of the composition) of the polymer, preferably at least 55 wt.% of the polymer, more preferably at least 60 wt.% of the polymer. In these embodiments the amount of polymer may be at least 80 wt.% (by total weight of the composition). As is shown in the appended examples, it has surprisingly been found that an increase in tensile modulus, yield stress, and impact strength manifests when the mechanochemically carbonated magnesium silicate is employed at these levels, while the unexpected decrease in impact strength at higher loadings of the mechanochemically carbonated magnesium silicate is avoided.

In some embodiments of the invention, the composition described herein is provided in the form of a masterbatch concentrate which comprises a mechanochemically carbonated magnesium silicate as described herein and a polymer as described herein, wherein the composition comprises at least 40 wt.% (by total weight of the composition) of the mechanochemically carbonated magnesium silicate, preferably at least 50 wt.%.

The compositions of the present invention will typically comprise further additives such as fillers, light stabilizers, heat stabilizers, compatibilizers, antioxidants, rheology modifiers (such as plasticizers), impact modifiers, flame retardants, lubricants and/or antistatic agents.

In particular embodiments of the invention, the composition of the invention further comprises a compatibilizer. Examples of suitable compatibilizers include but are not limited to ethylene-glycidyl methylacrylates, diazirine, grafted polyolefin derivatives (in particular maleic anhydride grafted polyethylene, maleic anhydride grafted polypropylene, or maleic anhydride grafted HDPE), titanium or zirconium containing organometals, organosilanes (in particular organosilanes comprising a polar functional group such as an amino functional group or trialkylvinylsilanes such as triethoxyvinylsilane), polyester wax, paraffin wax, and functionalized waxes (in particular functionalized paraffin wax such as oxidized paraffin wax). The present inventors have found that while such compatibilizers are not strictly required they may facilitate blending of the mechanochemically carbonated magnesium silicate into the polymer during processing.

In particular embodiments of the invention, the composition of the invention further comprises a filler selected from rubbers, preferably a rubber selected from styrene-butadiene rubbers, polyisoprene, chloroprene, nitrile rubber, polyisobutylene, polybutadiene, and combinations thereof, preferably styrene-butadiene. An example of a suitable and preferred rubber filler is recycled tyre rubber, in particular styrene-butadiene rubber from recycled tyres. In preferred embodiments of the invention, the composition comprises a filler selected from rubbers, preferably recycled tyre rubber as described herein, in an amount of at least 0.1 wt.% (by total weight of the composition), preferably at least 1 wt.%. Typically, the filler selected from rubbers is present in an amount of 0.1-10 wt.% (by total weight of the composition), preferably 1-8 wt.%, more preferably 4-6 wt.%.

The compositions described herein have various uses and application areas where they can provide the benefits of being a CO₂ negative material having excellent functional properties. In particularly preferred embodiments, the compositions described herein are suitable for use in the manufacture of a hardware composition employed in a hardware component of a luggage item or luggage accessory, wherein the hardware component is as herein defined and the luggage item or luggage accessory is as herein defined. Also disclosed herein is a luggage item or luggage accessory comprising a hardware component, wherein the hardware component comprises a hardware composition comprising the mechanochemically carbonated magnesium silicate and the polymer. The hardware component preferably comprises a hardware composition as described herein comprising the mechanochemically carbonated magnesium silicate and the polymer and a filler selected from rubbers as described herein, preferably recycled tyre rubber.

### The compositions comprising mechanochemically carbonated magnesium silicate and polymer, further comprising mechanochemically oxidized graphite

The inventors have furthermore found that the mechanochemically carbonated magnesium silicate of the present invention may be advantageously combined with mechanochemically oxidized graphite in order to be used as a filler in polymers. This has the particular advantage that other colorants such as carbon black do not need to be added to achieve a dark colour while CO₂ storage in the polymer composition is maximized. Furthermore, without wishing to be bound by any theory, the inventors believe a synergistic effect occurs when mechanochemically carbonated magnesium silicate and mechanochemically oxidized graphite are used in combination, thereby providing improvement in specific material properties (e.g. tensile modulus, impact strength, yield stress or crystallization temperature) or overall mechanical profile when compared to the same amount of mechanochemically carbonated magnesium silicate or mechanochemically oxidized graphite alone.

Hence, in particularly preferred embodiments of the invention, there is provided the composition comprising mechanochemically carbonated magnesium silicate and a polymer as described herein before, and further comprising mechanochemically oxidized graphite.

In embodiments of the invention, there is provided a composition comprising mechanochemically carbonated magnesium silicate and a polymer as described herein before, and further comprising at least 0.1 wt.% (by total weight of the composition) of mechanochemically oxidized graphite, preferably at least 1 wt.% of mechanochemically oxidized graphite, more preferably at least 5 wt.% of mechanochemically oxidized graphite and/or at least 50 wt.% (by total weight of the composition) of the polymer, preferably at least 55 wt.% of the polymer, more preferably at least 60 wt.% of the polymer. Typically, the composition will comprise at least 5 wt.% of mechanochemically oxidized graphite and at least 50 wt.% (by total weight of the composition) of the polymer, preferably at least 55 wt.% of the polymer, more preferably at least 60 wt.% of the polymer.

In embodiments, there is provided a composition comprising mechanochemically carbonated magnesium silicate and a polymer as described herein before, and further comprising mechanochemically oxidized graphite, wherein the composition comprises less than 40 wt.% (by total weight of the composition) of mechanochemically oxidized graphite, preferably less than 30 wt.% of mechanochemically oxidized graphite, for example less than 20 wt.% of mechanochemically oxidized graphite.

In preferred embodiments of the invention, there is provided a composition comprising mechanochemically carbonated magnesium silicate and a polymer as described herein before and further comprising 0.1-40 wt.% (by total weight of the composition) of mechanochemically oxidized graphite, preferably 1-30 wt.% of mechanochemically oxidized graphite, more preferably 5-25 wt.% of mechanochemically oxidized graphite, and at least 50 wt.% (by total weight of the composition) of the polymer, preferably at least 55 wt.% of the polymer, more preferably at least 60 wt.% of the polymer.

The mechanochemically carbonated magnesium silicate and mechanochemically oxidized graphite are preferably comprised in the composition in a combined amount within the range of 0.1-40 wt.% (by total weight of the composition), preferably 1-30 wt.%, more preferably 5-25 wt.%. The mechanochemically carbonated magnesium silicate and mechanochemically oxidized graphite are preferably comprised in the composition in a ratio (w/w) mechanochemically carbonated magnesium silicate:mechanochemically oxidized graphite within the range of 1:10-10:1, preferably within the range of 6:1-1:6, preferably within the range 3:1-1:3.

According to the invention, the mechanochemically oxidized graphite preferably has
- a BET surface area within the range of at least 50 m²/g, preferably at least 100 m²/g, most preferably at least 150 m²/g, and
- a CO₂ content within the range of at least 2 wt.%, preferably at least 4 wt.%, more preferably at least 5 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

According to preferred embodiments of the invention, the mechanochemically oxidized graphite has
- a BET surface area within the range of 50-2000 m²/g, preferably 100-1500 m²/g, most preferably at least 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

According to particular embodiments of the invention, the mechanochemically oxidized graphite is a mildly mechanochemically oxidized graphite which has
- a BET surface area within the range of 50-300 m²/g, preferably 150-250 m²/g, and
- a CO₂ content within the range of 3-15 wt.%, preferably 5-10 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 1-20 µm.
Such a mechanochemically oxidized graphite typically has a D10 within the range of 0.2-5 µm and a D90 within the range of 25-50 µm.

According to particular embodiments of the invention, the mechanochemically oxidized graphite is an extensively mechanochemically oxidized graphite which has
- a BET surface area within the range of 400-1300 m²/g, preferably 600-900 m²/g, and
- a CO₂ content within the range of 16-30 wt.%, preferably 18-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.1-0.8 µm.

The mechanochemically oxidized graphite described herein is obtainable by a method for producing mechanochemically oxidized graphite, comprising the following steps:
a) providing a solid feedstock comprising graphite;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain the mechanochemically oxidized graphite.

The embodiments described in the present disclosure relating to the method for producing mechanochemically carbonated magnesium silicate apply *mutatis mutandis* to the mechanochemically oxidized graphite obtainable by a method for producing mechanochemically oxidized graphite. For example, the various embodiments relating to the identity of the gas provided in step (b), and to the mechanical agitation operation of step (d) (including in particular the presence of inert grinding or milling media and catalyst) as explained herein in the context of the method for producing mechanochemically carbonated magnesium silicate are equally applicable to the mechanochemically oxidized graphite obtainable by a method for producing mechanochemically oxidized graphite which is described herein and which is included in the composition according to various embodiments of the invention together with a polymer.

Without wishing to be bound by any theory, the present inventors believe that the CO₂ sequestration process involved when submitting graphite to mechanical agitation in the presence of CO₂ generally results in the formation of oxidized graphite (i.e. an enriching of graphite with oxygen, thereby increasing the O/C ratio of the graphite), for example in the form of carbonyl groups, carboxyl groups, epoxy groups, hydroxyl groups and the like.

Indeed, as explained herein earlier the gas provided in step (b) may be any gas stream comprising CO₂, such as regular air, a waste gas stream having a low CO₂ concentration, or concentrated CO₂ streams. In embodiments the gas stream comprising CO₂ is regular air. In highly preferred embodiments the gas stream comprising CO₂ is a combustion flue gas, in particular a flue gas from fossil fuel combustion, wood pellet combustion, biomass combustion or municipal waste combustion. Fossil fuel combustion may be coal, petroleum, petroleum coke, natural gas, shale oil, bitumens, tar sand oil, or heavy oils combustion, or any combination thereof. The combustion flue gas may optionally have been treated to reduce the water content, the SO₂ content, and/or the NOₓ content.

Typical CO₂ concentrations for such combustion flue gas are in the range of 1-15 vol%, such as 1-10 vol% or 2-10 vol%, such that it is preferred that the gas provided in step (b) has a CO2 concentration in the range of 1-15 vol%, such as 2-10 vol%.

In embodiments of the invention, the gas provided in step (b) comprises less than 80 vol% CO₂, preferably less than 50 vol% CO₂. In such embodiments, the CO₂ concentration in the gas may be very low, such as less than 1 vol%, or less than 0.1 vol%. The CO₂ concentration in the gas provided in step (b) is preferably at least 0.1 vol%, more preferably at least 0.5 vol%. Typically, and preferably, the low concentrated gas stream is a combustion flue gas, having a CO₂ concentration in the range of 1-15 vol%, such as 1-10 vol% or 2-10 vol%, or 2-5 vol%. In alternative embodiments of the invention, the gas provided in step (b) comprises at least 80 vol% CO₂, preferably at least 95 vol% CO₂.

In some embodiments of the invention, the gas provided in step (b) comprises less than 1000 ppm (v/v) H₂O, preferably less than 100 ppm (v/v) H₂O. In more preferred embodiments of the invention, the gas provided in step (b) comprises more than 1000 ppm (v/v) H₂O, preferably more than 10000 ppm (v/v) H₂O.

In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In more preferred embodiments of the invention, the gas provided in step (b) comprises at least 80 vol% CO₂, preferably at least 95 vol% CO₂ and more than 1000 ppm (v/v) H₂O, preferably more than 10000 ppm (v/v) H₂O.

In some embodiments of the invention, the gas provided in step (b) comprises 1-15 vol% CO₂ and less than 1000 ppm (v/v) H₂O, preferably less than 100 ppm (v/v) H₂O. In more preferred embodiments of the invention, the gas provided in step (b) comprises 1-15 vol% CO₂, and more than 1000 ppm (v/v) H₂O, preferably more than 10000 ppm (v/v) H₂O.

In any embodiment of the invention, the gas provided in step (b) is typically not in a supercritical state as this is not necessary for the mild mechanochemical carbonation process of the present invention. Hence in any embodiment of the invention it is highly preferred that the gas is not in a supercritical state throughout any of the steps of the process.

In embodiments of the invention, step (d) is performed at a pressure of at least 3 atm, preferably at least 6 atm. In embodiments of the invention, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

In embodiments of the invention, step (d) is performed for at least 1 hour, preferably for at least 4 hours, more preferably for at least 8 hours.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, particle size analysis, amorphous content and/or CO₂ content determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (low-speed stirring or high-speed stirring), shearing (high-torque shearing), shaking, blending, a fluidized bed or ultrasonication, preferably grinding, milling, mixing, stirring (low-speed stirring or high-speed stirring), shearing (high-torque shearing), or ultrasonication. The present inventors have found that the mechanochemical carbonation process is facilitated if the mechanochemical agitation operation of step (d) is performed in the presence of inert grinding or milling media, preferably inert balls or beads. A preferred inert media is stainless steel. In such highly preferred embodiments, the mechanical agitation operation may be simply rotating the mechanical agitation unit containing the solid feedstock, the inert grinding or milling media, and the gas. This can conveniently be performed in a rotating drum.

In preferred embodiments of the invention, step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides, nickel oxides and combinations thereof.

Hence, as will be understood from the above, in highly preferred embodiments of the invention, step (d) comprises a mechanical agitation operation, preferably grinding, milling, mixing, stirring (low-speed stirring or high-speed stirring), shearing (high-torque shearing), shaking, blending, a fluidized bed or ultrasonication, in the presence of inert grinding or milling media and a transition metal oxide catalyst. The present inventors have found that it is advantageous with a view to the efficiency of the mechanochemical carbonation (e.g. reaction time, CO₂ absorption and particle size reduction) to employ inert media as described herein before, wherein the inert media is coated with said transition metal oxide catalyst. As explained herein elsewhere, the mechanical agitation operation may be simply rotating the mechanical agitation unit containing the solid feedstock, the inert grinding or milling media, the transition metal oxide catalyst and the gas. This can conveniently be performed in a rotating drum.

The solid feedstock provided in step (a) is typically a particulate material.

Hence, as will be understood by the skilled person in view of the different preferred embodiments set out above, in particular embodiments the present invention provides a composition comprising:
a) a polymer, preferably a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof, more preferably a polyolefin, such as polypropylene, polyethylene, copolymers thereof and combinations thereof; and
b) a mechanochemically carbonated magnesium silicate having
   - a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
   - a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
   - preferably a D50 within the range of 0.1-50 µm, preferably 1-25 µm, most preferably 2-10 µm; and
c) a mechanochemically oxidized graphite.
The mechanochemically carbonated magnesium silicate is preferably obtainable by the method for producing the mechanochemically carbonated magnesium silicate described herein.
The mechanochemically oxidized graphite preferably has
- a BET surface area within the range of 50-2000 m²/g, preferably 100-1500 m²/g, most preferably at least 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

In particular embodiments, the present invention provides a composition comprising:
a) a polymer, preferably a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof, more preferably polyolefins, such as polypropylene, polyethylene, copolymers thereof and combinations thereof; and
b) a mechanochemically carbonated magnesium silicate having
   - a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
   - a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
   - preferably a D50 within the range of 0.1-50 µm, preferably 1-25 µm, most preferably 2-10 µm; and
c) a mechanochemically oxidized graphite;

wherein the composition comprises at least 0.1 wt.% (by total weight of the composition) of the mechanochemically carbonated magnesium silicate, preferably at least 1 wt.% of the mechanochemically carbonated magnesium silicate, more preferably at least 5 wt.% of the mechanochemically carbonated magnesium silicate, and
wherein the composition comprises at least 0.1 wt.% (by total weight of the composition) of mechanochemically oxidized graphite, preferably at least 1 wt.% of mechanochemically oxidized graphite, more preferably at least 5 wt.% of mechanochemically oxidized graphite, and
wherein the composition comprises at least 50 wt.% (by total weight of the composition) of the polymer, preferably at least 55 wt.% of the polymer, more preferably at least 60 wt.% of the polymer.
The mechanochemically carbonated magnesium silicate is preferably obtainable by the method for producing the mechanochemically carbonated magnesium silicate described herein.
The mechanochemically oxidized graphite preferably has
- a BET surface area within the range of 50-2000 m²/g, preferably 100-1500 m²/g, most preferably 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

In particular embodiments the present invention provides a composition comprising:
a) a polymer, preferably a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof, more preferably polyolefins, such as polypropylene, polyethylene, copolymers thereof and combinations thereof; and
b) a mechanochemically carbonated magnesium silicate having
   - a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
   - a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
   - preferably a D50 within the range of 0.1-50 µm, preferably 1-25 µm, most preferably 2-10 µm; and
c) a mechanochemically oxidized graphite;

wherein the mechanochemically carbonated magnesium silicate and mechanochemically oxidized graphite are comprised in the composition in a combined amount of 0.1-40 wt.% (by total weight of the composition), preferably 1-30 wt.%, more preferably 5-25 wt.%,
   and
wherein the composition comprises at least 50 wt.% (by total weight of the composition) of the polymer, preferably at least 55 wt.% of the polymer, more preferably at least 60 wt.% of the polymer, and
wherein the mechanochemically carbonated magnesium silicate and mechanochemically oxidized graphite are preferably comprised in the composition in a ratio (w/w) mechanochemically carbonated magnesium silicate:mechanochemically oxidized graphite within the range of 1:10-10:1, preferably within the range of 6:1-1:6, preferably within the range 3:1-1 :3.
The mechanochemically carbonated magnesium silicate is preferably obtainable by the method for producing the mechanochemically carbonated magnesium silicate described herein.
The mechanochemically oxidized graphite preferably has
- a BET surface area within the range of 50-2000 m²/g, preferably 100-1500 m²/g, most preferably at least 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.
*The luggage item or luggage accessory comprising a hardware component, wherein the hardware component comprises a hardware composition comprising mechanochemically carbonated magnesium silicate as described herein and*/*or mechanochemically oxidized graphite as described herein.*

The inventors have identified the importance of considering the environment in all aspects of material development and design, responding to ever changing demands from consumers. The current consumption model is changing because people want to know the origins and sustainability behind the products they buy. This presents new opportunities but also new challenges. Work is needed to consider how to meet consumer expectations, and in some cases how to challenge and drive new attitudes, whilst not compromising on product performance.

One challenge is to address the impact carbon emissions have on our planet. Increasing levels of CO₂ contribute to air pollution and play a significant role in climate change. The inventors have developed a way to capture and store CO₂ in compositions (hardware compositions) for use in a hardware component of a luggage item or luggage accessory, using an effective and energy efficient mechanochemical process, thus reducing the environmental impact of the luggage items and luggage accessories. As the hardware component is removing CO₂ from the environment, the hardware component acts as a carbon sink. The present invention thus provides a luggage item or luggage accessory comprising a hardware component, wherein the hardware component comprises a hardware composition comprising stored CO₂.

A further aspect of the invention provides a luggage item or luggage accessory comprising a hardware component, wherein the hardware component comprises a hardware composition comprising mechanochemically carbonated magnesium silicate as described herein and/or mechanochemically oxidized graphite as described herein. The hardware composition may be any composition as defined herein, including: compositions defined herein comprising mechanochemically carbonated magnesium silicate and a polymer; compositions defined herein comprising mechanochemically carbonated magnesium silicate and a polymer, further comprising mechanochemically oxidized graphite; and hardware compositions defined herein. For example, the hardware composition may comprise mechanochemically carbonated magnesium silicate as described herein and/or mechanochemically oxidized graphite as described herein and may further comprise a polymer as described herein. In some embodiments the hardware component consists essentially of a hardware composition as herein defined, for example, the hardware component may be a hardware component consisting of a hardware composition as herein defined.

Waste of natural resources is also a huge problem to be addressed. The development of consumer models such as so-called fast fashion has driven the production of high volumes of goods with processes selected for speed, often with little regard for material quality or sustainability. There is a need to find new models that move away from current models. However, there is no clear consensus on what the new models should be. One problem to be addressed is that products such as luggage items and luggage accessories typically have a variety of different uses. The average consumer may, for example, have a first bag for transporting a laptop to and from meetings, a second bag for socialising with friends, a third bag for use when out with the family and a fourth bag when exploring outdoors. Replacing the first, second, third and fourth bags with a multi-purpose bag reduces waste. However, the multi-purpose bag must be fit for all intended uses, suitable for use in a range of different environments (e.g., from the office to extremes of temperature and moisture levels) and robust enough to withstand the more frequent use that comes from replacing multiple bags with a single multi-purpose bag. The same applies for any type of luggage item and luggage accessory and to hardware components employed on said luggage item and luggage accessory. The present invention addresses this by providing a hardware component as disclosed herein. Surprisingly, the inventors have found that the hardware component disclosed herein is suitable for use in a range of different situations and different environments and provides good material properties (e.g. tensile modulus, impact strength, yield stress or crystallization temperature) and a good overall mechanical profile. The inventors have found that the hardware component disclosed herein is more robust and less likely to break than known hardware components employed in luggage items and luggage accessories.

The inventors have also found that the hardware composition disclosed herein can comprise recycled materials. Surprisingly, the use of recycled materials does not have a significant detrimental impact on the material properties (e.g. tensile modulus, impact strength, yield stress, crystallization temperature, and abrasion resistance) and overall mechanical profile of the hardware component. In some embodiments, the use of recycled materials improves the material properties (e.g. tensile modulus, impact strength, yield stress, crystallization temperature, and abrasion resistance) and overall mechanical profile of the hardware component.

Thus, a further aspect of the present invention is the use of a recycled material, such as a recycled polymer and/or a filler comprising recycled rubber (e.g., recycled tyre rubber), in a hardware composition, wherein the hardware composition is as herein defined. The hardware composition is employed in a hardware component as herein defined and the hardware component is employed in a luggage item or luggage accessory as herein defined. Typically the recycled material is a recycled polymer, wherein the polymer is as herein defined. Also described herein is the use of a luggage item or luggage accessory comprising a hardware component, wherein the hardware component comprises a hardware composition comprising recycled material. The recycled material may be a recycled polymer and/or a filler comprising recycled rubber.

By considering CO₂ capture, by providing a hardware component suitable for use in a variety of different situations and different environments and by using recycled materials, embodiments of the invention provide a holistic approach to addressing changing consumer expectations whilst not compromising on product performance. The hardware component disclosed herein is a more environmentally-friendly product that will be preferred by environmentally-aware consumers.

As used herein, the term "luggage item or luggage accessory" includes a backpack, tote bag, camera bag, laptop bag, travel wallet, card holder, key chain, bag for an accessory, cover, insert, organizer, sleeve, case (including a wheeled case such as a wheeled luggage case), accessory for a bag, phone bag, sling, rain cover, field organizer, packing cube, camera insert, sunglass case, detachable strap for a bag, camera protective wrap, wash bag, shoe pouch/bag, tech pouch, laptop sleeve, pencil case, keychain and bottle bag.

As used herein, the term "hardware component" includes a buckle, standard buckle, magnetic snap buckle, center bar buckle, double tongue buckle, heel bar buckle, roller bar buckle, side squeeze buckle, side release buckle, swivel snap, o-ring, triangle ring, rectangular ring, D-ring, heavy duty D-ring, double D-ring, sewable D-ring, square double D-ring, spring gate ring, strap slide, loop, sewable loop, snap hook loop, adjustable slick clip, cord end hook, adjust hidden clip, tension hook, suspended clip, safety triangle hook, swivel tactical hook, open gate keeper, snap hook, triangle hook, single gate keeper, double gate keeper, stable key hook, webbing adjuster, weblock, standard weblock, heavy duty weblock, webbing single bar lock, tension lock, name tag, zip, zip puller, zip clip, zip cord, bell stopper, webbing handle, chest clip, piping clip and webbing end.

A luggage item or luggage accessory may comprise one or more hardware components, for example at least one, two, three, four or five hardware components. The one or more hardware components may be any hardware components as defined herein. The luggage item or luggage accessory may, for example, comprise a woven or non-woven fabric base material and one or more hardware components, e.g., at least one, two, three, four or five hardware components. For example, a luggage item such as a bag typically comprises a woven textile base material substantially forming an enclosing wall of the bag, the bag further comprising one or more hardware components, wherein the one or more hardware components (e.g., at least one, two, three, four or five hardware components) are as defined herein, for example selected from a zip, a zip puller, a buckle and a name tag. For example, a luggage item or luggage accessory may comprise two or more zip pullers and a name tag. As an alternative to a woven or non-woven fabric base material, the luggage item or luggage accessory may, for example, comprise a hard shell case.

The hardware component described herein comprises a hardware composition comprising mechanochemically oxidized graphite and/or mechanochemically carbonated magnesium silicate. In some embodiments, the hardware composition comprises mechanochemically carbonated magnesium silicate, wherein the mechanochemically carbonated magnesium silicate is as described herein. The hardware composition may comprise at least 1 wt.% (by total weight of the hardware composition) of the mechanochemically carbonated magnesium silicate, preferably at least 5 wt.% of the mechanochemically carbonated magnesium silicate. In other embodiments, the hardware composition comprises mechanochemically oxidized graphite, wherein the mechanochemically oxidized graphite is as described herein. The hardware composition may comprise at least 1 wt.% (by total weight of the hardware composition) of the mechanochemically oxidized graphite, preferably at least 5 wt.% of the mechanochemically oxidized graphite.

Preferably, the hardware composition comprises mechanochemically carbonated magnesium silicate as described herein, wherein the hardware composition optionally further comprises mechanochemically oxidized graphite as described herein, for example, the hardware composition may comprise mechanochemically carbonated magnesium silicate as described herein and polymer as described herein, and optionally may further comprise mechanochemically oxidized graphite as described herein.

Typically, the hardware composition comprises mechanochemically carbonated magnesium silicate and mechanochemically oxidized graphite, wherein the mechanochemically oxidized graphite is as described herein and the mechanochemically carbonated magnesium silicate is as described herein. For example, the hardware composition may comprise the mechanochemically carbonated magnesium silicate and the mechanochemically oxidized graphite, wherein the hardware composition comprises a combined amount of the mechanochemically carbonated magnesium silicate and the mechanochemically oxidized graphite of at least 1 wt.% (by total weight of the hardware composition), preferably at least 5 wt.%. Preferably, the hardware composition comprises at least 1 wt.% (by total weight of the hardware composition) of the mechanochemically oxidized graphite and at least 1 wt.% (by total weight of the hardware composition) of the mechanochemically carbonated magnesium silicate, more preferably at least 5 wt.% of the mechanochemically carbonated magnesium silicate and at least 5 wt.% of the mechanochemically oxidized graphite.

Increasing the amount of mechanochemically carbonated magnesium silicate and/or mechanochemically oxidized graphite in the hardware composition provides the benefit of increasing the CO₂ stored in the hardware composition. The increased amount of mechanochemically carbonated magnesium silicate and/or mechanochemically oxidized graphite in the hardware composition may also lead to an optimisation of the material and mechanical properties of the hardware component comprising said hardware composition. In some embodiments, the hardware composition comprises at least 10 wt.% (by total weight of the hardware composition) of the mechanochemically carbonated magnesium silicate; at least 10 wt.% (by total weight of the hardware composition) of the mechanochemically oxidized graphite; or a combined amount of the mechanochemically carbonated magnesium silicate and the mechanochemically oxidized graphite of at least 10 wt.% (by total weight of the hardware composition). The combined amount of the mechanochemically carbonated magnesium silicate and the mechanochemically oxidized graphite employed in the hardware composition may be at least 15 wt.% (by total weight of the hardware composition), for example, at least 20 wt.%.

Preferably, the hardware composition comprises mechanochemically carbonated magnesium silicate as described herein and/or mechanochemically oxidized graphite as described herein and further comprises a polymer as described herein. The hardware composition may comprise: mechanochemically carbonated magnesium silicate and a polymer, wherein the mechanochemically carbonated magnesium silicate is as described herein and the polymer is as described herein; mechanochemically oxidized graphite and a polymer, wherein the mechanochemically oxidized graphite is as described herein and the polymer is as described herein; or mechanochemically carbonated magnesium silicate and mechanochemically oxidized graphite and a polymer, wherein the mechanochemically carbonated magnesium silicate is as described herein, the mechanochemically oxidized graphite is as described herein and the polymer is as described herein.

The hardware composition may comprise: (a) at least 1 wt.% (by total weight of the hardware composition) of the mechanochemically carbonated magnesium silicate, preferably at least 5 wt.% of the mechanochemically carbonated magnesium silicate; and/or (b) at least 1 wt.% (by total weight of the hardware composition) of the mechanochemically oxidized graphite, preferably at least 5 wt.% of the mechanochemically oxidized graphite; and (c) at least 50 wt.% (by total weight of the hardware composition) of the polymer, preferably at least 55 wt.% of the polymer, more preferably at least 60 wt.% of the polymer. Typically, the hardware composition comprises: (a) at least 1 wt.% (by total weight of the hardware composition) of the mechanochemically carbonated magnesium silicate, preferably at least 5 wt.% of the mechanochemically carbonated magnesium silicate; and (b) at least 1 wt.% (by total weight of the hardware composition) of the mechanochemically oxidized graphite, preferably at least 5 wt.% of the mechanochemically oxidized graphite; and (c) at least 50 wt.% (by total weight of the hardware composition) of the polymer, preferably at least 55 wt.% of the polymer, more preferably at least 60 wt.% of the polymer.

The hardware composition may comprise (a) from 1 to 40 wt.% (by total weight of the hardware composition) of the mechanochemically carbonated magnesium silicate, preferably from 5 to 30 wt.% of the mechanochemically carbonated magnesium silicate; and/or (b) from 1 to 40 wt.% (by total weight of the hardware composition) of the mechanochemically oxidized graphite, preferably from 5 to 30 wt.% of mechanochemically oxidized graphite; and (c) at least 50 wt.% (by total weight of the hardware composition) of the polymer, preferably at least 55 wt.% of the polymer. Typically, the hardware composition comprises (a) from 1 to 40 wt.% (by total weight of the hardware composition) of the mechanochemically carbonated magnesium silicate, preferably from 5 to 30 wt.% of the mechanochemically carbonated magnesium silicate; and (b) from 1 to 40 wt.% (by total weight of the hardware composition) of the mechanochemically oxidized graphite, preferably from 5 to 30 wt.% of mechanochemically oxidized graphite; and (c) at least 50 wt.% (by total weight of the hardware composition) of the polymer, preferably at least 55 wt.% of the polymer.

Preferably the polymer is a recycled polymer. The polymer may be recycled using any known recycling technique. Preferred recycled polymer includes recycled polyacetal, recycled polyethylene terephthalate, recycled polypropylene, recycled polyethylene and recycled polybutylene adipate terephthalate, copolymers and combinations thereof. Highly preferred recycled polymers are recycled polyolefins, such as recycled polypropylene, recycled polyethylene, copolymers thereof and combinations thereof, in particular polypropylene. Recycled polyethylene includes recycled HDPE, recycled LDPE, recycled LLDPE, etc.

In particular embodiments of the invention, the hardware composition comprising mechanochemically carbonated magnesium silicate and/or mechanochemically oxidized graphite, and preferably a polymer, further comprises a filler selected from rubbers, preferably a rubber selected from styrene-butadiene rubbers, polyisoprene, chloroprene, nitrile rubber, polyisobutylene, polybutadiene, and combinations thereof, preferably styrene-butadiene. An example of a suitable and preferred rubber filler is recycled rubber, e.g., a recycled tyre rubber, in particular styrene-butadiene rubber from recycled tyres. The rubber may be recycled using any known recycling technique. In preferred embodiments of the invention, the hardware composition comprises a filler selected from rubbers, preferably recycled tyre rubber as described herein, in an amount of at least 0.1 wt.% (by total weight of the hardware composition), preferably at least 1 wt.%. Typically, the filler selected from rubbers is present in an amount of from 0.1 to 10 wt.% (by total weight of the hardware composition), preferably from 1 to 8 wt.%, more preferably from 4 to 6 wt.%.

The hardware composition may comprise (a) at least 1 wt.% (by total weight of the hardware composition) of the mechanochemically carbonated magnesium silicate, preferably at least 5 wt.% of the mechanochemically carbonated magnesium silicate; and/or (b) at least 1 wt.% (by total weight of the hardware composition) of the mechanochemically oxidized graphite, preferably at least 5 wt.% of the mechanochemically oxidized graphite; and (c) at least 50 wt.% (by total weight of the hardware composition) of the polymer, preferably at least 55 wt.% of the polymer, more preferably at least 60 wt.% of the polymer; and (d) at least 0.1 wt.% (by total weight of the hardware composition) of the filler selected from rubbers, preferably at least 1 wt.% of the filler selected from rubbers, for example: (a) at least 1 wt.% (by total weight of the hardware composition) of the mechanochemically carbonated magnesium silicate, preferably at least 5 wt.% of the mechanochemically carbonated magnesium silicate; and (b) at least 1 wt.% (by total weight of the hardware composition) of the mechanochemically oxidized graphite, preferably at least 5 wt.% of the mechanochemically oxidized graphite; and (c) at least 50 wt.% (by total weight of the hardware composition) of the polymer, preferably at least 55 wt.% of the polymer, more preferably at least 60 wt.% of the polymer; and (d) at least 0.1 wt.% (by total weight of the hardware composition) of the filler selected from rubbers, preferably at least 1 wt.% of the filler selected from rubbers.

In some embodiments, the hardware composition comprises (a) from 1 to 40 wt.% (by total weight of the hardware composition) of the mechanochemically carbonated magnesium silicate, preferably from 5 to 30 wt.% of the mechanochemically carbonated magnesium silicate; and/or (b) from 1 to 40 wt.% (by total weight of the hardware composition) of the mechanochemically oxidized graphite, preferably from 5 to 30 wt.% of mechanochemically oxidized graphite; and (c) at least 50 wt.% (by total weight of the hardware composition) of the polymer, preferably at least 55 wt.% of the polymer; and (d) from 0.1 to 10 wt.% (by total weight of the hardware composition), preferably from 1 to 8 wt.%, more preferably from 4 to 6 wt.% of the filler selected from rubbers, for example, (a) from 1 to 40 wt.% (by total weight of the hardware composition) of the mechanochemically carbonated magnesium silicate, preferably from 5 to 30 wt.% of the mechanochemically carbonated magnesium silicate; and (b) from 1 to 40 wt.% (by total weight of the hardware composition) of the mechanochemically oxidized graphite, preferably from 5 to 30 wt.% of mechanochemically oxidized graphite; (c) at least 50 wt.% (by total weight of the hardware composition) of the polymer, preferably at least 55 wt.% of the polymer; and (d) from 0.1 to 10 wt.% (by total weight of the hardware composition), preferably from 1 to 8 wt.%, more preferably from 4 to 6 wt.% of the filler selected from rubbers.

Preferably the filler selected from rubbers comprises recycled rubber, more preferably recycled tyre rubber. In particularly environmentally friendly embodiments of the invention the hardware composition comprises a recycled polymer as defined herein and a recycled rubber (e.g., recycled tyre rubber) as defined herein.

Examples of hardware components comprising the hardware composition comprising the mechanochemically carbonated magnesium silicate as described and the polymer as described herein and the mechanochemically oxidized graphite as described herein include:
- A hardware component, for example a name tag, comprising a hardware composition comprising about 10 wt.% (by total weight of the hardware composition) mechanochemically carbonated magnesium silicate; about 20 wt.% (by total weight of the hardware composition) mechanochemically oxidized graphite; about 65 wt.% (by total weight of the hardware composition) polyethylene (such as HDPE); and about 5 wt.% (by total weight of the hardware composition) rubber as described herein, preferably recycled tyre rubber.
- A hardware component, for example a zip-puller, comprising a hardware composition comprising about 15 wt.% (by total weight of the hardware composition) mechanochemically carbonated magnesium silicate; about 10 wt.% (by total weight of the hardware composition) mechanochemically oxidized graphite; about 70 wt.% (by total weight of the hardware composition) polypropylene; and about 5 wt.% (by total weight of the hardware composition) rubber as described herein, preferably recycled tyre rubber.
- A hardware component, for example a zip-puller, comprising a hardware composition comprising about 15 wt.% (by total weight of the hardware composition) mechanochemically carbonated magnesium silicate; about 10 wt.% (by total weight of the hardware composition) mechanochemically oxidized graphite; about 67 wt.% (by total weight of the hardware composition) polypropylene; and about 5 wt.% (by total weight of the hardware composition) rubber as described herein, preferably recycled tyre rubber.

A particularly preferred example of the hardware component is:
- A hardware component, for example a zip-puller, comprising a hardware composition comprising about 15 wt.% (by total weight of the hardware composition) mechanochemically carbonated magnesium silicate; about 10 wt.% (by total weight of the hardware composition) mechanochemically oxidized graphite; about 67 wt.% (by total weight of the hardware composition) polypropylene; and about 5 wt.% (by total weight of the hardware composition) rubber as described herein, preferably recycled tyre rubber.

### Methods for the co-production of mechanochemically carbonated magnesium silicate and mechanochemically oxidized graphite

As is explained herein elsewhere, the present inventors have found that it is desirable to provide a composition comprising mechanochemically carbonated magnesium silicate, mechanochemically oxidized graphite, and a polymer. Such compositions have been described in detail in the previous sections. The present inventors have also found that it is advantageous if the mechanochemically carbonated magnesium silicate and the mechanochemically oxidized graphite are co-produced, thereby obtaining a mixture of mechanochemically carbonated magnesium silicate and the mechanochemically oxidized graphite. Such mixtures are useful in polymer compositions as described hereinbefore.

Hence, in another aspect, the invention provides a mixture of mechanochemically carbonated magnesium silicate and mechanochemically oxidized graphite. The mechanochemically carbonated magnesium silicate and mechanochemically oxidized graphite preferably have the properties described herein elsewhere.

In a further aspect, the invention provides a method for co-producing a mixture of mechanochemically carbonated magnesium silicate and mechanochemically oxidized graphite as described herein, comprising the following steps:
a) providing a solid feedstock comprising magnesium silicate and graphite;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain a mixture of mechanochemically carbonated magnesium silicate and mechanochemically oxidized graphite.

It is within the capacity of one skilled in the art, in light of the guidance provided in the present disclosure, to adapt the relevant process parameters such that mechanochemically carbonated magnesium silicate and mechanochemically oxidized graphite are obtained which have the properties recited herein.

The embodiments described in the present disclosure relating to the method for producing mechanochemically carbonated magnesium silicate apply *mutatis mutandis* to the method for co-producing mechanochemically carbonated magnesium silicate and mechanochemically oxidized graphite. For example, the various embodiments relating to the identity of the gas provided in step (b), and to the mechanical agitation operation of step (d) (including in particular the presence of inert grinding or milling media and catalyst) as explained herein in the context of the method for producing mechanochemically carbonated magnesium silicate are equally applicable to the method for co-producing mechanochemically carbonated magnesium silicate and mechanochemically oxidized graphite which is described herein and which is included in the composition according to various embodiments of the invention together with a polymer.

In embodiments of the invention, the magnesium silicate comprised in the solid feedstock, preferably the entire solid feedstock, has a moisture content of less than 3 wt.%, preferably less than 2 wt.%, more preferably less than 1 wt.% and/or a D50 within the range of 0.1-500 µm, preferably within the range of 0.2-50 µm.

The gas provided in step (b) may be any gas stream comprising CO₂, such as regular air, a waste gas stream having a low CO₂ concentration, or concentrated CO₂ streams. In embodiments the gas stream comprising CO₂ is regular air. In highly preferred embodiments the gas stream comprising CO₂ is a combustion flue gas, in particular a flue gas from fossil fuel combustion, wood pellet combustion, biomass combustion or municipal waste combustion. Fossil fuel combustion may be coal, petroleum, petroleum coke, natural gas, shale oil, bitumens, tar sand oil, or heavy oils combustion, or any combination thereof. The combustion flue gas may optionally have been treated to reduce the water content, the SO₂ content, and/or the NOₓ content.

Typical CO₂ concentrations for such combustion flue gas are in the range of 1-15 vol%, such as 1-10 vol% or 2-10 vol%, such that it is preferred that the gas provided in step (b) has a CO2 concentration in the range of 1-15 vol%, such as 2-10 vol%.

In embodiments of the invention, the gas provided in step (b) comprises less than 80 vol% CO₂, preferably less than 50 vol% CO₂. In such embodiments, the CO₂ concentration in the gas may be very low, such as less than 1 vol%, or less than 0.1 vol%. The CO₂ concentration in the gas provided in step (b) is preferably at least 0.1 vol%, more preferably at least 0.5 vol%. Typically, and preferably, the low concentrated gas stream is a combustion flue gas, having a CO₂ concentration in the range of 1-15 vol%, such as 1-10 vol% or 2-10 vol%, or 2-5 vol%. In alternative embodiments of the invention, the gas provided in step (b) comprises at least 80 vol% CO₂, preferably at least 95 vol% CO₂.

In some embodiments of the invention, the gas provided in step (b) comprises less than 1000 ppm (v/v) H₂O, preferably less than 100 ppm (v/v) H₂O. In more preferred embodiments of the invention, the gas provided in step (b) comprises more than 1000 ppm (v/v) H₂O, preferably more than 10000 ppm (v/v) H₂O.

In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In more preferred embodiments of the invention, the gas provided in step (b) comprises at least 80 vol% CO₂, preferably at least 95 vol% CO₂ and more than 1000 ppm (v/v) H₂O, preferably more than 10000 ppm (v/v) H₂O.

In some embodiments of the invention, the gas provided in step (b) comprises 1-15 vol% CO₂ and less than 1000 ppm (v/v) H₂O, preferably less than 100 ppm (v/v) H₂O. In more preferred embodiments of the invention, the gas provided in step (b) comprises 1-15 vol% CO₂, and more than 1000 ppm (v/v) H₂O, preferably more than 10000 ppm (v/v) H₂O.

In any embodiment of the invention, the gas provided in step (b) is typically not in a supercritical state as this is not necessary for the mild mechanochemical carbonation process of the present invention. Hence in any embodiment of the invention it is highly preferred that the gas is not in a supercritical state throughout any of the steps of the process.

In embodiments of the invention, step (d) is performed at a pressure of at least 3 atm, preferably at least 6 atm. In embodiments of the invention, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

In embodiments of the invention, step (d) is performed for at least 1 hour, preferably for at least 4 hours, more preferably for at least 8 hours.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, particle size analysis, and CO₂ content determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (low-speed stirring or high-speed stirring), shearing (high-torque shearing), shaking, blending, a fluidized bed or ultrasonication, preferably grinding, milling, mixing, stirring (low-speed stirring or high-speed stirring), shearing (high-torque shearing), or ultrasonication. The present inventors have found that the mechanochemical carbonation process is facilitated if the mechanochemical agitation operation of step (d) is performed in the presence of inert grinding or milling media, preferably inert balls or beads. A preferred inert media is stainless steel. In such highly preferred embodiments, the mechanical agitation operation may be simply rotating the mechanical agitation unit containing the solid feedstock, the inert grinding or milling media, and the gas. This can conveniently be performed in a rotating drum.

In preferred embodiments of the invention, step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides, nickel oxides and combinations thereof.

Hence, as will be understood from the above, in highly preferred embodiments of the invention, step (d) comprises a mechanical agitation operation, preferably grinding, milling, mixing, stirring (low-speed stirring or high-speed stirring), shearing (high-torque shearing), shaking, blending, a fluidized bed or ultrasonication, in the presence of inert grinding or milling media and a transition metal oxide catalyst. The present inventors have found that it is advantageous with a view to the efficiency of the mechanochemical carbonation (e.g. reaction time, CO₂ absorption and particle size reduction) to employ inert media as described hereinbefore, wherein the inert media is coated with said transition metal oxide catalyst. As explained herein elsewhere, the mechanical agitation operation may be simply rotating the mechanical agitation unit containing the solid feedstock, the inert grinding or milling media, the transition metal oxide catalyst and the gas. This can conveniently be performed in a rotating drum.

The solid feedstock provided in step (a) is typically a particulate material.

In highly preferred embodiments of the invention, the mechanochemically carbonated magnesium silicate and mechanochemically oxidized graphite are comprised in the mixture obtained in step (d) in a ratio (w/w) mechanochemically carbonated magnesium silicate:mechanochemically oxidized graphite within the range of 1:10-10:1, preferably within the range of 6:1-1:6, preferably within the range 3:1-1:3. The combined amount of the mechanochemically carbonated magnesium silicate and the mechanochemically oxidized graphite in the mixture obtained in step (d) is preferably at least 80 wt.% (by total weight of the mixture), more preferably at least 90 wt.%, most preferably at least 95 wt.%.

The mechanochemically carbonated magnesium silicate comprised in the mixture obtained in step (d) preferably has
- a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
- a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
- preferably a D50 within the range of 0.1-50 µm, preferably 1-25 µm, most preferably 2-10 µm;
and
the mechanochemically oxidized graphite comprised in the mixture obtained in step (d) preferably has
- a BET surface area within the range of 50-2000 m²/g, preferably 100-1500 m²/g, most preferably at least 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

In another aspect, the invention provides a mixture of mechanochemically carbonated magnesium silicate and mechanochemically oxidized graphite obtainable by the method for co-producing a mixture of mechanochemically carbonated magnesium silicate and mechanochemically oxidized graphite described herein. The mechanochemically carbonated magnesium silicate is preferably obtainable by the method for producing mechanochemically carbonated magnesium silicate described herein wherein the process is performed such that the mechanochemically carbonated magnesium silicate comprised in the mixture obtained in step (d) has
- a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
- a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
- preferably a D50 within the range of 0.1-50 µm, preferably 1-25 µm, most preferably 2-10 µm;
and
the mechanochemically oxidized graphite comprised in the mixture obtained in step (d) has
- a BET surface area within the range of 50-2000 m²/g, preferably 100-1500 m²/g, most preferably at least 150-1000 m²/g, and
- a CO₂ content within the range of 3-40 wt.%, preferably 4-30 wt.%, more preferably 5-25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min, and
- a D50 within the range of 0.01-50 µm, preferably 0.1-25 µm, most preferably 0.2-20 µm.

### Methods for the preparation of a composition comprising mechanochemically carbonated magnesium silicate and a polymer

In another aspect the invention provides a method for preparing a composition as described herein, said method comprising the following steps:
(i) providing mechanochemically carbonated magnesium silicate as described herein;
(ii) providing a polymer as described herein;
(iii) optionally providing mechanochemically oxidized graphite as described herein; and
(iv) combining the mechanochemically carbonated magnesium silicate of step (i) with the polymer of step (ii) and optionally the mechanochemically oxidized graphite of step (iii).

In embodiments, step (iv) comprises dry blending the materials of step (i)-(iii) and extruding the resulting mixture. In such a method, simultaneous co-extruding of the mechanochemically carbonated magnesium silicate of step (i) with the polymer of step (ii) and optionally with the mechanochemically oxidized graphite of step (iii) can be achieved.

In alternative embodiments, the polymer provided in step (ii) may be extruded first, such that step (iv) comprises addition of the material of step (i) and optionally of step (iii) into the plasticized polymer.

The additives such as fillers, light stabilizers, heat stabilizers, compatibilizers, antioxidants, rheology modifiers (such as plasticizers), impact modifiers, flame retardants, lubricants and/or antistatic agents may be added at any point throughout the method, typically they are added in step (iv) together with the materials of step (i)-(iii). It is preferred to add a rubber filler as described herein earlier.

It will be understood by the skilled person that the embodiments of the invention described herein in the context of the compositions of the invention, especially in relation to features of the mechanochemically carbonated magnesium silicate, the mechanochemically oxidized graphite, the polymer, or in relation to the amounts of each material used, are equally applicable to the method for preparing said composition described herein.

### Methods for the preparation of a luggage item or accessory

The invention also provides a method for preparing a luggage item or luggage accessory as defined herein comprising a hardware component as defined herein, wherein the hardware component comprises a hardware composition as defined herein, said method comprising the following steps:
(i) providing mechanochemically carbonated magnesium silicate as described herein; or providing mechanochemically oxidized graphite as described herein; or providing mechanochemically carbonated magnesium silicate as described herein and mechanochemically oxidized graphite as described herein;
(ii) providing a polymer as described herein;
(iii) optionally providing a filler selected from rubbers as described herein; and
(iv) combining the mechanochemically carbonated magnesium silicate and/or mechanochemically oxidized graphite of step (i) with the polymer of step (ii) and optionally the filler selected from rubbers of step (iii), thereby obtaining a hardware composition comprising mechanochemically carbonated magnesium silicate and/or the mechanochemically oxidized graphite, and the polymer and optionally the filler selected from rubbers;
(v) employing the hardware composition obtained in step (iv) in a hardware component of a luggage item or luggage accessory.

Preferably said method comprises the following steps:
(i) providing mechanochemically carbonated magnesium silicate as described herein and optionally mechanochemically oxidized graphite as described herein;
(ii) providing a polymer as described herein;
(iii) optionally providing a filler selected from rubbers as described herein; and
(iv) combining the mechanochemically carbonated magnesium silicate and optionally mechanochemically oxidized graphite of step (i) with the polymer of step (ii) and optionally the filler selected from rubbers of step (iii), thereby obtaining a hardware composition comprising: mechanochemically carbonated magnesium silicate and optionally the mechanochemically oxidized graphite; the polymer; and optionally the filler selected from rubbers;
(v) employing the hardware composition obtained in step (iv) in a hardware component of a luggage item or luggage accessory.

In embodiments, step (iv) comprises dry blending the materials of step (i)-(iii) and extruding the resulting mixture. In such a method, simultaneous co-extruding of the mechanochemically carbonated magnesium silicate and/or mechanochemically oxidized graphite of step (i) with the polymer of step (ii) and optionally with filler of step (iii) can be achieved.

In alternative embodiments, the polymer provided in step (ii) may be extruded first, such that step (iv) comprises addition of the material of step (i) and optionally of step (iii) into the plasticized polymer.

**Additives** such as additional fillers, light stabilizers, heat stabilizers, compatibilizers, antioxidants, rheology modifiers (such as plasticizers), impact modifiers, flame retardants, lubricants and/or antistatic agents may be added at any point throughout the method, typically they are added in step (iv) together with the materials of step (i)-(iii).

It will be understood by the skilled person that the embodiments of the invention described herein in the context of the compositions of the invention, including hardware compositions, especially in relation to features of the mechanochemically carbonated magnesium silicate, the mechanochemically oxidized graphite, the polymer, or in relation to the amounts of each material used, are equally applicable to the method for preparing said hardware composition described herein.

### Uses of the mechanochemically carbonated magnesium silicate

In another aspect the invention provides the use of a mechanochemically carbonated magnesium silicate as described herein:
- as a filler in polymers;
- to increase the crystallization temperature of a polymer
- to increase the tensile modulus of a polymer;
- to increase the yield stress of a polymer; and/or
- to increase the impact strength of a polymer.

The uses of the present invention are preferably provided wherein the polymer is selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof. Notable copolymers are homophasic or heterophasic PE-PP copolymers. The polymer is preferably selected from polyacetal, polyethylene terephthalate, polypropylene, polyethylene and polybutylene adipate terephthalate, copolymers and combinations thereof. Highly preferred are polyolefins, such as polypropylene, polyethylene, copolymers thereof and combinations thereof, in particular polypropylene. Polyethylene includes HDPE, LDPE, LLDPE, etc.

In particular embodiments of the invention, the uses of the invention are provided comprising the use of the mechanochemically carbonated magnesium silicate in a composition comprising the mechanochemically carbonated magnesium silicate and the polymer, wherein the mechanochemically carbonated magnesium silicate is present in an amount of at least 0.1 wt.% (by total weight of the composition), preferably at least 1 wt.%, more preferably at least 5 wt.% and/or wherein the polymer is present in an amount of at least 50 wt.% (by total weight of the composition), preferably at least 60 wt.%, more preferably at least 70 wt.%.

In particular embodiments of the invention, there is provided the use of mechanochemically carbonated magnesium silicate as described herein to increase the crystallization temperature of a polymer, comprising use of the mechanochemically carbonated magnesium silicate in a composition comprising the mechanochemically carbonated magnesium silicate and the polymer, wherein the mechanochemically carbonated magnesium silicate is present in an amount of at least 3 wt.% (by total weight of the composition), preferably at least 4 wt.%. Preferably, the use is to increase the crystallization temperature of a polymer by at least 2.5°C compared to the same composition without the mechanochemically carbonated magnesium silicate.

In particular embodiments of the invention, there is provided the use of a mechanochemically carbonated magnesium silicate as described herein to increase the tensile modulus of a polymer, comprising use of the mechanochemically carbonated magnesium silicate in a composition comprising the mechanochemically carbonated magnesium silicate and the polymer, wherein the mechanochemically carbonated magnesium silicate is present in an amount of at least 13 wt.% (by total weight of the composition), preferably at least 14 wt.%. Preferably, the use is to increase the tensile modulus of a polymer by at least 30%, preferably at least 40% compared to the same composition without the mechanochemically carbonated magnesium silicate.

In particular embodiments of the invention, there is provided the use of a mechanochemically carbonated magnesium silicate as described herein to increase the tensile modulus of a polymer without decreasing the impact strength, comprising use of the mechanochemically carbonated magnesium silicate in a composition comprising the mechanochemically carbonated magnesium silicate and the polymer, wherein the mechanochemically carbonated magnesium silicate is present in an amount of 3-13 wt.% (by total weight of the composition), preferably 4-12 wt.%. Preferably, the use is to increase the tensile modulus of a polymer by at least 30% and the impact strength by at least 10% compared to the same composition without the mechanochemically carbonated magnesium silicate.

In preferred embodiments of the invention there is provided the use of a combination of a mechanochemically carbonated magnesium silicate as described herein and a mechanochemically oxidized graphite as described herein:
- as a filler in polymers;
- to increase the crystallization temperature of a polymer
- to increase the tensile modulus of a polymer;
- to increase the yield stress of a polymer; and/or
- to increase the impact strength of a polymer.

In preferred embodiments of the invention, there is provided the use of a combination of a mechanochemically carbonated magnesium silicate as described herein and a mechanochemically oxidized graphite as described herein as a filler in polymers to provide a dark colour, such as to provide a black polymer composition.

In some embodiments of the invention there is provided the use of mechanochemically carbonated magnesium silicate as described herein for reducing the CO₂ impact of a polymer, for providing carbon storage in a polymer or as a CO₂-negative filler.

In particularly preferred embodiments, the mechanochemically carbonated magnesium silicate is used as a filler for a polymer which is used in the manufacture of a hardware composition employed in a hardware component of a luggage item or luggage accessory, wherein the hardware component is as herein defined and the luggage item or luggage accessory is as herein defined.

It will be understood by the skilled person that the embodiments of the invention described herein in the context of the compositions of the invention, especially in relation to the features of the mechanochemically carbonated magnesium silicate, the mechanochemically oxidized graphite, the polymer, or in relation to the amounts of each material used, are equally applicable to the uses described herein.

In another aspect the invention provides a method:
- to increase the crystallization temperature of a polymer
- to increase the tensile modulus of a polymer;
- to increase the yield stress of a polymer; and/or
- to increase the impact strength of a polymer,
wherein the method comprises the addition of a mechanochemically carbonated magnesium silicate as described herein to the polymer.

The methods of the present invention are preferably provided wherein the polymer is selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably *cis*-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof. Notable copolymers are homophasic or heterophasic PE-PP copolymers. The polymer is preferably selected from polyacetal, polyethylene terephthalate, polypropylene, polyethylene and polybutylene adipate terephthalate, copolymers and combinations thereof. Highly preferred are polyolefins, such as polypropylene, polyethylene, copolymers thereof and combinations thereof, in particular polypropylene. Polyethylene includes HDPE, LDPE, LLDPE, etc.

In particular embodiments of the invention the methods of the invention are provided comprising the addition of the mechanochemically carbonated magnesium silicate to a polymer, thereby obtaining a composition comprising mechanochemically carbonated magnesium silicate and polymer, wherein the mechanochemically carbonated magnesium silicate is present in an amount of at least 0.1 wt.% (by total weight of the composition), preferably at least 1 wt.%, more preferably at least 5 wt.% and/or wherein the polymer is present in an amount of at least 50 wt.% (by total weight of the composition), preferably at least 55 wt.%, more preferably at least 60 wt.%.

In particular embodiments of the invention the methods of the invention is provided to increase the crystallization temperature of a polymer comprising the addition of the mechanochemically carbonated magnesium silicate to a polymer, thereby obtaining a composition comprising mechanochemically carbonated magnesium silicate and polymer, wherein the mechanochemically carbonated magnesium silicate is present in an amount of at least 3 wt.% (by total weight of the composition), preferably at least 4 wt.%. Preferably, the method is to increase the crystallization temperature of a polymer by at least 2.5°C compared to the same composition without the mechanochemically carbonated magnesium silicate.

In particular embodiments of the invention the methods of the invention is provided to increase the tensile modulus of a polymer comprising the addition of the mechanochemically carbonated magnesium silicate to a polymer, thereby obtaining a composition comprising mechanochemically carbonated magnesium silicate and polymer, wherein the mechanochemically carbonated magnesium silicate is present in an amount of at least 13 wt.% (by total weight of the composition), preferably at least 14 wt.%. Preferably, the method is to increase the tensile modulus of a polymer by at least 30%, preferably at least 40% compared to the same composition without the mechanochemically carbonated magnesium silicate.

In particular embodiments of the invention the methods of the invention is provided to increase the tensile modulus of a polymer without decreasing the impact strength comprising addition of the mechanochemically carbonated magnesium silicate to a polymer, thereby obtaining a composition comprising mechanochemically carbonated magnesium silicate and polymer, wherein the mechanochemically carbonated magnesium silicate is present in an amount of 3-13 wt.% (by total weight of the composition), preferably 4-12 wt.%. Preferably, the method is to increase the tensile modulus of a polymer by at least 30% and the impact strength by at least 10% compared to the same composition without the mechanochemically carbonated magnesium silicate.

In preferred embodiments of the invention there is provided a method:
- to increase the crystallization temperature of a polymer
- to increase the tensile modulus of a polymer;
- to increase the yield stress of a polymer;
- to increase the impact strength of a polymer,
the method comprising addition of a combination of a mechanochemically carbonated magnesium silicate as described herein and a mechanochemically oxidized graphite to the polymer.

In preferred embodiments of the invention, there is provided a method to provide a dark colour to a polymer comprising the addition of a combination of a mechanochemically carbonated magnesium silicate as described herein and a mechanochemically oxidized graphite as described herein to a polymer.

In some embodiments of the invention there is provided a method for reducing the CO₂ impact of a polymer, or for providing carbon storage in a polymer, the method comprising addition of a mechanochemically carbonated magnesium silicate as described herein to the polymer.

In particularly preferred embodiments, there is provided a method for providing a luggage item or luggage accessory, wherein the luggage item or luggage accessory is as defined herein, the method comprising addition of a mechanochemically carbonated magnesium silicate as described herein and/or a mechanochemically oxidized graphite as described herein to a polymer, thereby obtaining a hardware composition comprising mechanochemically carbonated magnesium silicate and/or mechanochemically oxidized graphite and polymer, and employing said hardware composition as a hardware component, wherein the hardware component is as defined herein, of said luggage item or luggage accessory. Preferably, the material properties (e.g. tensile modulus, impact strength, yield stress, crystallization temperature, and abrasion resistance) and overall mechanical profile of the hardware component are approximately the same as they found for the virgin polymer. In some embodiments, the material properties (e.g. tensile modulus, impact strength, yield stress, crystallization temperature, and abrasion resistance) and overall mechanical profile of the hardware component are improved when compared with the virgin polymer.

It will be understood by the skilled person that the embodiments of the invention described herein in the context of the compositions of the invention, especially in relation to the features of the mechanochemically carbonated magnesium silicate, the mechanochemically oxidized graphite, the polymer, or in relation to the amounts of each material used, are equally applicable to the methods described herein.

### Examples

The BET surface area, the BJH desorption cumulative surface area of pores and the desorption average pore width (4V/A by BET) were determined using nitrogen at a temperature of 77K using a sample mass of 0.5-1g wherein samples were heated to 400 °C for a desorption cycle prior to surface area analysis.

Amorphous content by X-Ray Diffraction (XRD) was carried out using a corundum standard. XRD data was collected using a PANalytical Aeris X-ray diffactometer. XRD analysis and Rietveld Refinement was performed using HighScore Plus XRD analysis software.

Particle Size Distribution measurements were carried out on a Fritsch Analysette 22 Nanotec using Fraunhofer diffraction theory.

The CO₂ content was determined as the mass loss above 200°C measured by TGA employing a temperature trajectory wherein the temperature was increased from room temperature to 800°C at a rate of 10 °C/min and then decreased to room temperature at a rate of 10 °C/min employing a Setaram TAG 16 TGA/DSC dual chamber balance and a 0.1-2 mg sample.

The tensile modulus was determined as the Young's modulus determined in accordance with ASTM 638 (2014).

The yield stress was determined as the pressure exhibited at yielding as determined in accordance with ASTM 638 (2014).

The impact strength was determined in accordance with the Charpy impact test of ASTM D6110 (2018).

### Example 1

Mechanochemically carbonated magnesium silicate was produced by inserting a 20-gram sample of hydrous magnesium silicate powder into a pressure cell with 1400 grams of inert media (stainless steel balls) coated with titanium dioxide. The cell is pressurized to 0.27 MPa (4.08 atm) using a gas composition consisting of 80 mol% CO2 and 20 mol% air, placed in a high energy ball mill for and rotated at 65 RPM for 72 hours. The reaction was initiated at room temperature and no heating or cooling was applied.

The virgin magnesium silicate (i.e. before it was submitted to mechanochemical carbonation) had a mass loss above 200°C measured by TGA as described herein of less than 2 wt.% (which the inventors postulate is likely mostly water loss).

### Example 2

Polymer compositions were prepared by dry blending the mechanochemically carbonated magnesium silicate of example 1 with an injection-grade homophasic polypropylene. The solid mixture is fed into a hopper section of a co-rotating twin-screw extruder. The extruder was operated with a temperature gradient from 210 _{°}C to 120 _{°}C from the die to the throat section, respectively. The motor RPM was set at 100 RPM and the feed was set at 6 RPM. The polymer and mechanochemically carbonated magnesium silicate mixture is conveyed into and melt-mixed throughout the extruder yielding a continuous solid strand exiting the extruder. The extrudate is then passed through a water-cooling trough followed by a vacuum/blower drying tube, and finally, pelletized. The properties of the resulting materials were as follows.

| | **Mate rial** | **wt.% mechanochemically carbonated magnesium silicate of example 1** | **Tensile Modulus (MPa)** | **Yield Stress (MPa)** | **Notched Impact Strength (kJ/m²)** |
|---|---|---|---|---|---|
| A | PP | 0 | 715 | 27.8 | 2.9 |
| B | PP | 2% | 788.8 | 29.3 | 3.3 |
| C | PP | 5% | 936.2 | 30.7 | 3.2 |
| D | PP | 10% | 950 | 30.7 | 3.3 |
| E | PP | 15% | 1036.2 | 30.1 | 2.5 |

### Example 3

Polymer compositions were prepared by dry blending the mechanochemically carbonated magnesium silicate of example 1 with an post-industrial recycled high-density polyethylene. The solid mixture is fed into a hopper section of a co-rotating twin-screw extruder. The extruder was operated with temperature gradient from 180 _{°}C to 100 _{°}C from the die to the throat section, respectively. The motor RPM was set at 100 RPM and the feed was set at 6 RPM. The polymer and mechanochemically carbonated magnesium silicate mixture is conveyed into and melt-mixed throughout the extruder yielding a continuous solid strand exiting the extruder. The extrudate is then passed through a water-cooling trough followed by a vacuum/blower drying tube, and finally, pelletized.

| | **Material** | **wt.% mechanochemically carbonated magnesium silicate of example 1** | **Tensile Modulus (MPa)** | **Yield Stress (MPa)** | **Elongation at break (%)** |
|---|---|---|---|---|---|
| F | R-HDPE | 10% | 910.26 | 12.5 | 18.50% |
| G | R-HDPE | 20% | 1117.17 | 13.21 | 13% |
| H | R-HDPE | 30% | 1262.98 | 12.7 | 10% |

### Example 4

Surface modified mechanochemically carbonated magnesium silicate is created by reacting the mechanochemically carbonated magnesium silicate of example 1 with a metalloorganic compatibilizer in ethanol and removing the solvent. Polymer compositions were prepared by dry blending the resulting surface modified mechanochemically carbonated magnesium silicate with a post-industrial recycled high-density polyethylene. The solid mixture is fed into a hopper section of a co-rotating twin-screw extruder. The extruder was operated with temperature gradient from 180 _{°}C to 100 _{°}C from the die to the throat section, respectively. The motor RPM was set at 100 RPM and the feed was set at 6 RPM. The polymer and magnesium silicate mixture is conveyed into and melt-mixed throughout the extruder yielding a continuous solid strand exiting the extruder. The extrudate is then passed through a water-cooling trough followed by a vacuum/blower drying tube, and finally, pelletized

| | **Material** | **wt.% mechanochemically carbonated magnesium silicate of example 1** | **Tensile Modulus (MPa)** | **Yield Stress (MPa)** | **Notched Impact Strength (kJ/m2)** | **Elongation at break (%)** |
|---|---|---|---|---|---|---|
| I | PP | 2% | 1234.01 | 15.03 | 6.12 | 132% |
| J | PP | 5% | 1273.62 | 14.87 | 5.56 | 45% |
| K | PP | 10% | 1362.32 | 14.96 | 5.96 | 20% |

### Example 5

Mechanochemically oxidized graphite was produced by inserting a 10-kilogram sample of 325 mesh graphite of >98% purity into a pressure cell with 200 kilograms of inert media (ceramic balls) coated with titanium dioxide. The cell is pressurized to 0.689 MPa (6.8 atm) using a gas composition consisting of 99% mol% CO2 and <1% of nitrogen and oxygen gas, placed in a high energy ball mill for and rotated for 128 hours. The reaction was initiated at room temperature and no heating or cooling was applied. The obtained mechanochemically oxidized graphite had a CO₂ content of about 5.4 wt.% and a BET surface area of 210 m² / gram and a D10, D50, D90 of 2.21, 10.67, 31.92 µm, respectively.

### Example 6

A luggage hardware component in the form of a nametag was created from 5 wt.% recycled styrene-butadiene tires (20 mesh), 10 wt.% mechanochemically carbonated magnesium silicate of example 1, 20 wt.% mechanochemically oxidized graphite of example 5, and the balance of HDPE.

A luggage hardware component in the form of a zip-pullerwas created from 5 wt.% recycled styrene-butadiene tires (20 mesh), 15 wt.% mechanochemically carbonated magnesium silicate of example 1, 10 wt.% mechanochemically oxidized graphite of example 5, and the balance of recycled PP.

Both hardware components exhibited excellent mechanical properties.

### Example 7

Mechanochemically carbonated magnesium silicate was produced by inserting a 10 kg sample of magnesium silicate powder as received (CIMTALC^{®}, Median Particle Diameter D50 of 15 microns, loose bulk density 33 lbs/ft³, trapped bulk density 77 lbs/ft³) into a pressure cell with 150 kg of grinding media (12 mm ceramic ball bearings). The cell is pressurized to 0.45 MPa (4.42 atm) using industrial grade carbon dioxide, placed in a high energy ball mill for and rotated at 38 RPM for 48 hours. The reaction was initiated at room temperature and no heating or cooling was applied. After 48 hours, the reactor is allowed to cool and depressurized, and the product is separated by a vibratory separator to separate the product from the grinding media.

An XRD of the virgin magnesium silicate (i.e. before it was submitted to mechanochemical carbonation) and the processed magnesium silicate was recorded in order to determine the amorphous content. The results are shown in the following table.

| **Quantitative Weight %** | **Virgin Magnesium Silicate** | **Processed Magnesium Silicate** |
|---|---|---|
| Amorphous | 10.3 | 54.2 |

Energy-Dispersive X-ray Spectroscopy (EDS) of the virgin and processed magnesium silicate samples was recorded which showed wt.% of carbon of 9.14 and 20.78 respectively.

The obtained mechanochemically carbonated magnesium silicate had a CO₂ content of about 4.3 wt.% and a BET surface area of 572810 cm² / gram (= 57.28 m² / gram).

### Example 8

Magnesium silicate as received (JetFil^{®} P200, Median Particle Diameter D50 of 8.5 microns, loose bulk density 28 lbs/ft³, trapped bulk density 48 lbs/ft³) was loaded into a reactor in 20 to 35 gram quantities without additional treatment. Grinding media (5 mm steel bearings) were loaded into the reactor containing the magnesium silicate. The reactor was pressurized with industrial grade CO₂ gas to 0.68 MPa (6.8 atm) and sealed. The reactor was rotated at 65 RPM to allow for the grinding and carbonation to occur. Sample 8-A was ground for 3 days whilst sample 8-B was ground for 4 days. At the end of the run time, the reactor was depressurized, and the product was separated into a screen separator to separate the product from the grinding media.

| **Sample ID** | **CO₂ uptake Dry (%)** | **gCO₂/kg sample** |
|---|---|---|
| 8-A | 11.1% | 110.8 |
| 8-B | 11.2% | 111.7 |

### Aspects of the invention

1. A luggage item or luggage accessory comprising a hardware component, wherein the hardware component comprises a hardware composition comprising:
   (a) mechanochemically carbonated magnesium silicate, wherein the mechanochemically carbonated magnesium silicate has
      - a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
      - a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min;
      and/or
   (b) mechanochemically oxidized graphite, wherein the mechanochemically oxidized graphite has a BET surface area of at least 50 m²/g and a CO₂ content of at least 2 wt.%, wherein the CO₂ content is determined as mass loss above 200°C measured by TGA employing a temperature trajectory wherein the temperature was increased from room temperature to 800°C at a rate of 10 °C/min and then decreased to room temperature at a rate of 10 °C/min.
2. The luggage item or luggage accessory according to aspect 1, wherein the hardware composition further comprises a polymer.
3. The luggage item or luggage accessory according to aspect 1 or aspect 2, wherein the hardware composition comprises at least 1 wt.% of the mechanochemically carbonated magnesium silicate, preferably at least 5 wt.% of the mechanochemically carbonated magnesium silicate.
4. The luggage item or luggage accessory according to any one of aspects 1 to 3, wherein the hardware composition comprises at least 1 wt.% of the mechanochemically oxidized graphite, preferably at least 5 wt.% of the mechanochemically oxidized graphite.
5. The luggage item or luggage accessory according to any one of aspects 1 to 4, wherein the hardware composition comprises the mechanochemically carbonated magnesium silicate and the mechanochemically oxidized graphite and optionally wherein the composition comprises a combined amount of the mechanochemically carbonated magnesium silicate and the mechanochemically oxidized graphite of at least 5 wt.%.
6. The luggage item or luggage accessory according to any one of aspects 1 to 5, wherein the mechanochemically carbonated magnesium silicate has:
   a) a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
   b) a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
   c) one, two, or all, preferably all, of the following characteristics:
      ∘ a D10 of from 0.01 to 5 µm, preferably of from 0.1 to 3 µm, most preferably of from 0.5 to 1.5 µm;
      ∘ a D50 of from 0.1 to 50 µm, preferably of from 1 to 25 µm, most preferably of from 2 to 10 µm;
      ∘ a D90 of from 5 to 150 µm, preferably of from 10 to 100 µm, most preferably of from 15 to 40 µm.
7. The luggage item or luggage accessory according to any one of aspects 1 to 6, wherein the mechanochemically oxidized graphite has:
   a) a BET surface area of from 50 to 2000 m²/g, preferably of from 100 to 1500 m²/g, most preferably of from 150 to 1000 m²/g; and/or
   b) a CO₂ content of from 3 to 40 wt.%, preferably of from 4 to 30 wt.%, more preferably of from 5 to 25 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and/or
   c) a D50 of from 0.01 to 50 µm, preferably of from 0.1 to 25 µm, most preferably of from 0.2 to 20 µm.
8. The luggage item or luggage accessory according to any one of aspects 2 to 7, wherein the polymer is selected from epoxide resin, phenol-formaldehyde resin, polyalkylene terephthalate, polalkylene adipate terephthalate, polyalkylene isosorbide terephthalate, polyalkylene aromatic polyamide, polyacrylonitrile, polyacetal, polyimide, aromatic polyester, polyisoprene, polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadiene-styrene, nitrile rubber, styrene-butadiene, ethylene-vinyl acetate, copolymers thereof and combinations thereof, preferably polyolefins, such as polypropylene, polyethylene, copolymers thereof and combinations thereof.
9. The luggage item or luggage accessory according to any one of aspects 2 to 8, wherein the hardware composition comprises more than 50 wt.% of the polymer, preferably more than 55 wt.% of the polymer, more preferably more than 60 wt.% of the polymer.
10. The luggage item or luggage accessory according to any one of aspects 1 to 9, wherein the hardware composition further comprises a filler selected from rubbers, preferably a rubber selected from styrene-butadiene rubbers, polyisoprene, chloroprene, nitrile rubber, polyisobutylene, polybutadiene, and combinations thereof in an amount of at least 0.1 wt.%, preferably at least 1 wt.%.
11. The luggage item or luggage accessory according to any one of aspects 2 to 10, wherein the hardware composition comprises:
   (a) at least 1 wt.% of the mechanochemically carbonated magnesium silicate, preferably at least 5 wt.% of the mechanochemically carbonated magnesium silicate; and
   (b) at least 1 wt.% of the mechanochemically oxidized graphite, preferably at least 5 wt.% of the mechanochemically oxidized graphite; and
   (c) more than 50 wt.% of the polymer, preferably more than 55 wt.% of the polymer, more preferably more than 60 wt.% of the polymer,
   and optionally further comprising a filler selected from rubbers, preferably a rubber selected from styrene-butadiene rubbers, polyisoprene, chloroprene, nitrile rubber, polyisobutylene, polybutadiene, and combinations thereof in an amount of at least 0.1 wt.%, preferably at least 1 wt.%.
12. The luggage item or luggage accessory according to any one of aspects 2 to 11, wherein the hardware composition comprises:
   (a) from 1 to 40 wt.% of the mechanochemically carbonated magnesium silicate, preferably from 5 to 30 wt.% of the mechanochemically carbonated magnesium silicate; and
   (b) from 1 to 40 wt.% of the mechanochemically oxidized graphite, preferably from 5 to 30 wt.% of mechanochemically oxidized graphite; and
   (c) more than 50 wt.% of the polymer, preferably more than 55 wt.% of the polymer,
   and optionally further comprising a filler selected from rubbers, preferably a rubber selected from styrene-butadiene rubbers, polyisoprene, chloroprene, nitrile rubber, polyisobutylene, polybutadiene, and combinations thereof in an amount of from 0.1 to 10 wt.%, preferably of from 1 to 8 wt.%, more preferably of from 4 to 6 wt.%.
13. The luggage item or luggage accessory according to any one of aspects 2 to 12, wherein the polymer is recycled polymer.
14. The luggage item or luggage accessory according to any one of aspects 10 to 13, wherein the filler selected from rubbers comprises recycled rubber.
15. A method for producing the luggage item or luggage accessory according to any one of aspects 1 to 14, comprising the following steps:
   i) providing mechanochemically carbonated magnesium silicate; providing mechanochemically oxidized graphite; or providing mechanochemically carbonated magnesium silicate and mechanochemically oxidized graphite;
   ii) providing a polymer;
   iii) optionally providing a filler selected from rubbers, preferably a rubber selected from styrene-butadiene rubbers, polyisoprene, chloroprene, nitrile rubber, polyisobutylene, polybutadiene, and combinations thereof;
   iv) combining the mechanochemically carbonated magnesium silicate and/or the mechanochemically oxidized graphite of step (i) with the polymer of step (ii) and optionally the filler selected from rubbers of step (iii), thereby obtaining a hardware composition comprising mechanochemically carbonated magnesium silicate and/or the mechanochemically oxidized graphite, polymer and optionally the filler selected from rubbers;
   v) employing the hardware composition obtained in step (iv) as a hardware component of a luggage item or luggage accessory.

## Claims

1. A mechanochemically carbonated magnesium silicate which has
• a BET surface area within the range of 20 to 100 m²/g, preferably 30 to 80 m²/g, more preferably 40 to 70 m²/g, more preferably 45 to 65 m²/g, and/or an amorphous content as determined by XRD of at least 30 wt.%, preferably at least 40 wt.%, more preferably at least 50 wt.%, more preferably at least 60 wt.%; and
• a CO₂ content of at least 3 wt.%, preferably at least 6 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min.

2. Mechanochemically carbonated magnesium silicate according to claim 1 which has:
• a BET surface area within the range of 20 to 100 m²/g, preferably 30 to 80 m²/g, more preferably 40 to 70 m²/g, most preferably 45 to 65 m²/g; and
• a CO₂ content within the range of 3-40 wt.%, preferably 5-35 wt.%, more preferably 7-30 wt.%, wherein the CO₂ content is determined as the mass loss above 200°C measured by TGA employing a temperature trajectory wherein the temperature was increased from room temperature to 800°C at a rate of 10 °C/min and then decreased to room temperature at a rate of 10 °C/min; and
• an amorphous content as determined by XRD of at least 30 wt.%, preferably at least 40 wt.%, more preferably at least 50 wt.%, even more preferably at least 60 wt.%.

3. Mechanochemically carbonated magnesium silicate according to claim 1 or claim 2 which has one, two, or all, preferably all, of the following characteristics:
• a D10 within the range of 0.01-5 µm, preferably 0.1-3 µm, most preferably 0.5-1.5 µm;
• a D50 within the range of 0.1-50 µm, preferably 1-25 µm, most preferably 2-10 µm;
• a D90 within the range of 5-150 µm, preferably 10-100 µm, most preferably 15-40 µm.

4. A method for producing the mechanochemically carbonated magnesium silicate according to any one of claims 1-3, comprising the following steps:
a) providing a solid feedstock comprising magnesium silicate;
b) providing a gas comprising CO₂;
c) introducing said solid feedstock and said gas into a mechanical agitation unit; and
d) subjecting said solid feedstock to a mechanical agitation operation in the presence of said gas in said mechanical agitation unit at a pressure of at least 1 atm to obtain the mechanochemically carbonated magnesium silicate.

5. Method according to claim 4 wherein the solid feedstock has a D50 within the range of 0.1-500 µm, preferably within the range of 0.2-50 µm, more preferably within the range of 0.5-15 µm.

6. Method according to claim 4 or claim 5 wherein the solid feedstock comprises at least 80% hydrous magnesium silicate as determined by X-ray diffraction, preferably at least 90%, more preferably at least 95% and optionally comprises at least 1% of a mineral selected from magnesite, dolomite and/or chlorite as determined by X-ray diffraction.

7. Method according to any one of claims 4-6 wherein the gas provided in step (b) is combustion flue gas.

8. Method according to any one of claims 4-7 wherein step (d) is performed
• at a pressure of at least 3 atm, preferably at least 6 atm;
• at a temperature of less than 150°C, preferably less than 100 °C, preferably less than 90 °C; and/or
• for at least 1 hour, preferably for at least 4 hours, more preferably at least 8 hours.

9. Method according to any one of claims 4-8 the mechanochemical agitation operation of step (d) comprises mixing, stirring (low-speed stirring or high-speed stirring), shearing (high-torque shearing), shaking, blending, a fluidized bed or ultrasonication, preferably mixing, stirring (low-speed stirring or high-speed stirring), shearing (high-torque shearing) or ultrasonication.

10. Method according to any one of claims 4-9 wherein step (d) is performed in the presence of a catalyst, preferably a transition metal oxide catalyst, more preferably a transition metal dioxide catalyst, most preferably a transition metal dioxide catalyst selected from the group consisting of iron oxides, cobalt oxides, ruthenium oxides, titanium oxides, nickel oxides and combinations thereof.

11. Mechanochemically carbonated magnesium silicate obtainable by the method according to any one of claims 4-10.

12. A composition comprising mechanochemically carbonated magnesium silicate according to any one of claims 1-3 or 11 and a polymer, preferably a polyolefin.

13. Composition according to claim 12 wherein the composition comprises at least 1 wt.% of the mechanochemically carbonated magnesium silicate, preferably at least 5 wt.%, more preferably at least 10 wt.%.

14. Composition according to claim 12 or claim 13 further comprising a mechanochemically carbonated fly ash.

15. Use of the mechanochemically carbonated magnesium silicate according to any one of claims 1-3 or 11:
• as a filler in polymers;
• to increase the crystallization temperature of a polymer
• to increase the tensile modulus of a polymer;
• to increase the yield stress of a polymer; and/or
• to increase the impact strength of a polymer.
